# EUROPEAN PATENT SPECIFICATION

(11) **EP 4 359 478 B1**
(45) Date of publication and mention of the grant of the patent: **06.08.2025**
(21) Application number: 22747472.3
(22) Date of filing: 24.06.2022
(51) Int. Cl.: C09D 5/00, C09D 5/44

(54) **SYSTEMS AND METHODS FOR COATING MULTI-LAYERED COATED METAL SUBSTRATES**
SYSTEME UND VERFAHREN ZUR BESCHICHTUNG VON MEHRSCHICHTIGEN BESCHICHTETEN METALLSUBSTRATEN
SYSTÈMES ET PROCÉDÉS DE REVÊTEMENT DE SUBSTRATS MÉTALLIQUES REVÊTUS MULTICOUCHES

(30) Priority: 24.06.2021 US 202163214320 P
(43) Date of publication of application: 01.05.2024
(73) Proprietor: PRC-Desoto International, Inc., Sylmar, California 91342 (US)
(72) Inventor: FURAR, Elizabeth Anne, Pittsburgh, Pennsylvania 15215 (US); DACKO, Christopher Andrew, Pittsburgh, Pennsylvania 15212 (US)
(74) Representative: f & e patent
(86) International application number: PCT/US2022/034829
(87) International publication number: WO 2022/272015

(56) References cited:
- WO-A1-2009/023687
- WO-A1-2018/031992
- WO-A1-2018/032006

## Description

### FIELD

The present disclosure is directed towards systems for coating metal substrates, methods of coating metal substrates, and multi-layered coated metal substrates.

### BACKGROUND

Coatings are applied to appliances, automobiles, aircraft, and the like for a number of reasons, most notably for aesthetic reasons, corrosion protection and/or enhanced performance such as durability and protection from physical damage. WO 2009/023687 A1 describes electrodepositable coating compositions. WO 2018/032006 A1 relates to systems and methods for treating a metal substrate. WO 2018/031992 A1 relates to sealing compositions. To improve the corrosion resistance of a metal substrate, corrosion inhibitors are typically used in the coatings applied to the substrate. However, evolving government regulations in view of health and environmental concerns have led to the phasing out of certain corrosion inhibitors and other additives in coating compositions, making the production of effective coating compositions challenging. Systems and methods for improving the corrosion resistance of metal substrates are desired.

### SUMMARY

The present disclosure provides a system for coating a metal substrate comprising an anionic electrodepositable coating composition comprising a film-forming binder comprising an anionic salt group-containing film-forming polymer and a curing agent, wherein the anionic salt group-containing film-forming polymer does not include carbamate functional groups if the anionic salt group-containing film-forming polymer is a phosphatized epoxy resin; and a non-electrodepositable coating composition comprising a curable, organic film-forming binder and a corrosion inhibitor comprising an azole.

The present disclosure also provides a method of coating a metal substrate, the method comprising electrodepositing the electrodepositable coating composition described above to at least a portion of the substrate to form an electrodeposited coating layer; and applying the non-electrodepositable coating composition described above to at least a portion of the electrodeposited coating layer to form a second coating layer.

The present disclosure is further directed to a multilayer coated metal substrate comprising (a) a metal substrate; (b) an electrodeposited coating layer present on at least a portion of the metal substrate, wherein the electrodeposited coating layer comprises an anionic salt group-containing film-forming polymer and a curing agent, and the anionic salt group-containing film-forming polymer does not include carbamate functional groups if the anionic salt group-containing film-forming polymer is a phosphatized epoxy resin; and (c) a second coating layer present on at least a portion of the electrodeposited coating layer, wherein the second coating layer comprises a corrosion inhibitor comprising an azole, wherein the electrodeposited coating layer is electrodeposited from the electrodepositable coating composition described above, and the second coating layer is applied from the non-electrodepositable coating composition described above.

### DETAILED DESCRIPTION

The present disclosure is directed to a system for coating a metal substrate comprising an anionic electrodepositable coating composition comprising a film-forming binder comprising an anionic salt group-containing film-forming polymer and a curing agent, wherein the anionic salt group-containing film-forming polymer does not include carbamate functional groups if the anionic salt group-containing film-forming polymer is a phosphatized epoxy resin; and a non-electrodepositable coating composition comprising a curable, organic film-forming binder and a corrosion inhibitor comprising an azole.

### Electrodepositable Coating Composition

According to the present disclosure, the system for coating a metal substrate comprises an anionic electrodepositable coating composition comprising a film-forming binder comprising an anionic salt group-containing film-forming polymer and a curing agent, wherein the anionic salt group-containing film-forming polymer does not include carbamate functional groups if the anionic salt group-containing film-forming polymer is a phosphatized epoxy resin.

As used herein, the term "electrodepositable coating composition" refers to a composition that is capable of being deposited onto an electrically conductive substrate under the influence of an applied electrical potential.

As used herein, the term "anionic salt group containing film-forming polymer" refers to an anionic polymer comprising at least partially neutralized anionic functional groups, such as carboxylic acid and phosphoric acid groups that impart a negative charge. As used herein, the term "polymer" encompasses, but is not limited to, oligomers and both homopolymers and copolymers. The anionic salt group-containing film-forming polymer may comprise active hydrogen functional groups. As used herein, the term "active hydrogen functional groups" refers to those groups that are reactive with isocyanates as determined by the Zerewitinoff test as discussed above, and include, for example, hydroxyl groups, primary or secondary amine groups, and thiol groups. Anionic salt group-containing film-forming polymers that comprise active hydrogen functional groups may be referred to as active hydrogencontaining, anionic salt group-containing film-forming polymers. The anionic salt group containing film-forming polymer may be used in an anionic electrodepositable coating composition.

The anionic salt group-containing film-forming polymer may comprise base-solubilized, carboxylic acid group-containing film-forming polymers such as the reaction product or adduct of a drying oil or semi-drying fatty acid ester with a dicarboxylic acid or anhydride; and the reaction product of a fatty acid ester, unsaturated acid or anhydride and any additional unsaturated modifying materials which are further reacted with polyol. Also suitable are the at least partially neutralized interpolymers of hydroxy-alkyl esters of unsaturated carboxylic acids, unsaturated carboxylic acid and at least one other ethylenically unsaturated monomer. Still another suitable anionic electrodepositable resin comprises an alkyd-aminoplast vehicle, i.e., a vehicle containing an alkyd resin and an amine-aldehyde resin. Another suitable anionic electrodepositable resin composition comprises mixed esters of a resinous polyol.

Other acid functional polymers may also be used such as phosphatized polyepoxide or phosphatized addition polymers.

As used herein, the term "phosphated epoxy resin" refers to an ungelled resin derived from at least a polyepoxide and a phosphorous acid.

Suitable polyepoxides include any compound or a mixture of compounds having more than 1.0 epoxy groups per molecule. Several polyepoxides are known in the art. Examples of the polyepoxides can be found in the Handbook of Epoxy Resins, Lee and Neville, 1967, McGraw-Hill Book Company.

The polyepoxide may comprise a polyglycidyl ether of a polyphenol, such as bisphenol A. As will be appreciated, such polyepoxides can be produced by etherification of a polyphenol with an epichlorohydrin in the presence of an alkali. Suitable polyphenols include, without limitation, 1,1-bis(4-hydroxyphenyl)ethane; 2,2-bis(4-hydroxyphenyl)propane; 1,1-bis(4-hydroxyphenyl)isobutane; 2,2-bis(4-hydroxytertiarybutylphenyl)propane; bis(2-hydroxynaphthyl)methane; 1,5-dihydroxynaphthalene; 1,1-bis(4-hydroxy-3-allylphenyl)ethane; and 4,4-bis(4'-hydroxyphenyl)valeric acid. Another useful class of polyepoxides is produced similarly from polyphenol resins.

In addition to the polyepoxides described above, there can also be employed addition polymerization polymers containing pendant epoxy groups. Such polymers can be made by copolymerizing a variety of polymerizable ethylenically unsaturated monomers at least one of which is an epoxy containing monomer, e.g., glycidyl acrylate or glycidyl methacrylate.

A suitable ethylenically unsaturated monomer that does not contain a group that is reactive with the epoxy group can be employed as a comonomer. Exemplary such monomers include α,β-ethylenically unsaturated monomers, such as unsaturated carboxylic acid esters of saturated alcohols containing from 1 to about 8 carbon atoms, and monovinyl aromatic monomers such as styrene and vinyl toluene.

The polyepoxide may have an epoxy equivalent weight of 172 to 5000 g/equivalent, such as 300 to 1000 g/equivalent.

In addition to the polyepoxide(s), the reaction mixture can contain a monomeric monoepoxide such as monoglycidyl ethers of alcohols and phenols, such as phenyl glycidyl ether, and glycidyl esters of monocarboxylic acids such as glycidyl neodecanoate.

The phosphorous acid that is reacted with the polyepoxide may comprise a phosphoric acid, such as, for example, a 100 percent orthophosphoric acid or a phosphoric acid aqueous solution such as is referred to as an 85 percent phosphoric acid. Other forms of phosphoric acid such as superphosphoric acid, diphosphoric acid and triphosphoric acid can be employed herein. Also, the polymeric or partial anhydrides of phosphoric acids can be employed. Aqueous phosphoric acids that are of about 70 to 90% by weight, such as about 85 percent by weight phosphoric acid may be used.

The phosphorous acid that is reacted with the polyepoxide may consist essentially of a phosphoric acid. In other words, the phosphoric acid optionally may be present in an amount of at least 98 mole %, such as at least 99% mole %, or, in some cases, 100 mole %, based on the total moles of phosphorous acid that is reacted with the polyepoxide.

Alternatively, in addition to, or in lieu of, the phosphoric acid, phosphonic acids and/or phosphinic acids can be reacted with the polyepoxide. Examples of phosphonic acids are organophosphonic acids of the structure: 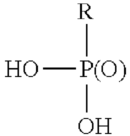 wherein R is organic radical such as those having a total of 1-30, such as 6-18 carbons. R can be aliphatic, aromatic or mixed aliphatic/aromatic and can be an unsubstituted hydrocarbon or a substituted hydrocarbon.

Examples of phosphinic acids are organophosphinic acids of the structure: 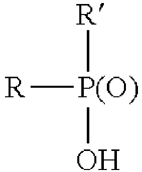 wherein R and R' are each independently hydrogen or an organic radical. Examples of such radicals are those having a total of 1-30, such as 6-18 carbons. The organic component of the phosphinic acid (R, R') can be aliphatic, aromatic or mixed aliphatic/aromatic. R and R' can be an unsubstituted hydrocarbon or a substituted hydrocarbon.

Representative suitable organophosphonic acids and organophosphinic acids are: 3-amino propyl phosphonic acid, 4-methoxyphenyl phosphonic acid, benzylphosphonic acid, butylphosphonic acid, carboxyethylphosphonic acid, diphenylphosphinic acid, dodecylphosphonic acid, ethylidenediphosphonic acid, heptadecylphosphonic acid, methylbenzylphosphinic acid, naphthylmethylphosphinic acid, octadecylphosphonic acid, octylphosphonic acid, pentylphosphonic acid, methylphenylphosphinic acid, phenylphosphonic acid, styrene phosphonic acid, dodecyl bis-1,12-phosphonic acid, poly(ethylene glycol) phosphonic acid, including mixtures thereof.

The phosphorous acid may comprise a mixture of: (a) a phosphoric acid; and (b) an organophosphonic acid and/or an organophosphinic acid. The resulting phosphated epoxy resin comprises a mixture of reaction products formed from reactants comprising: (i) a polyepoxide; (ii) a phosphoric acid; and (iii) an organophosphonic acid and/or an organophosphinic acid. As will be appreciated, such a mixture of reaction products may include a phosphated epoxy resin in which the phosphated portion is derived solely from phosphoric acid, a phosphated epoxy resin in which the phosphated portion is derived solely from organophosphonic and/or organophosphinic acid, and/or a phosphated epoxy resin in which the phosphated portion is derived from both a phosphoric acid and/or organophosphonic and/or organophosphinic acid. The relative amounts of the polyepoxide and the phosphorus acids that are reacted with one another are: for each equivalent of epoxy, there may be 0.1 to 0.8 moles of phosphoric acid and from 0.01 to 0.4 moles of organophosphonic and/or organophosphinic acid with the molar ratio of phosphoric to organophosphonic and/or organophosphinic acid being within the range of 1:0.01 to 0.5. The phosphated epoxy resin may have an acid value of 10 to 60, such as 15 to 50, based on resin solids.

In adapting the phosphated epoxy resin to be dispersed in a water-based continuous medium, it is neutralized with a base. Suitable bases include both organic or inorganic bases. Illustrative examples of suitable bases are ammonia, monoalkylamines, dialkylamines, or trialkylamines such as ethylamine, propylamine, dimethylamine, dibutylamine and cyclohexylamine; monoalkanolamine, dialkanolamine or trialkanolamine such as ethanolamine, diethanolamine, triethanolamine, propanolamine, isopropanolamine, diisopropanolamine, dimethylethanolamine and diethylethanolamine; morpholine, e.g., N-methylmorpholine or N-ethylmorpholine. The percent of neutralization is such as would make the resin(s) water-dispersible and electrophoretic. Typically, the resin(s) are at least partially neutralized from 20 to 200 percent, 40 to 150 percent, such as 60 to 120 percent neutralization.

According to the present disclosure, the anionic salt group-containing film-forming polymer may be present in the anionic electrodepositable coating composition in an amount of at least 50% by weight, such as at least 55% by weight, such as at least 60% by weight, and may be present in an amount of no more than 90% by weight, such as no more than 80% by weight, such as no more than 75% by weight, based on the total weight of the resin solids of the electrodepositable coating composition. The anionic salt group-containing film-forming polymer may be present in the anionic electrodepositable coating composition in an amount 50% to 90%, such as 55% to 80%, such as 60% to 75%, based on the total weight of the resin solids of the electrodepositable coating composition. As used herein, the "resin solids" include the anionic salt group-containing film-forming polymer, the curing agent, and any additional water-dispersible non-pigmented component(s) present in the electrodepositable coating composition.

According to the present disclosure, the film-forming binder of the anaionic electrodepositable coating composition of the present disclosure may further comprise a curing agent. The curing agent may react with the reactive groups, such as active hydrogen groups, of the anionic salt group-containing film-forming polymer to effectuate cure of the coating composition to form a coating. As used herein, the term "cure", "cured" or similar terms, as used in connection with the coating compositions described herein, means that at least a portion of the components that form the coating composition are crosslinked to form a coating. Additionally, curing of the coating composition refers to subjecting said composition to curing conditions (e.g., elevated temperature) leading to the reaction of the reactive functional groups of the components of the coating composition, and resulting in the crosslinking of the components of the composition and formation of an at least partially cured coating. Non-limiting examples of suitable curing agents are at least partially blocked polyisocyanates, aminoplast resins and phenoplast resins, such as phenolformaldehyde condensates including allyl ether derivatives thereof.

According to the present disclosure, the film-forming binder component of the electrodepositable coating composition may further comprise a curing agent. The current agent may comprise, for example, an at least partially blocked polyisocyanate, aminoplast resin, phenoplast resin, or any combination thereof.

Suitable at least partially blocked polyisocyanates include aliphatic polyisocyanates, aromatic polyisocyanates, and mixtures thereof. The curing agent may comprise an at least partially blocked aliphatic polyisocyanate. Suitable at least partially blocked aliphatic polyisocyanates include, for example, fully blocked aliphatic polyisocyanates, such as those described in U.S. Patent No. 3,984,299 at col. 1 line 57 to col. 3 line 15, this portion of which is incorporated herein by reference, or partially blocked aliphatic polyisocyanates that are reacted with the polymer backbone, such as is described in U.S. Patent No. 3,947,338 at col. 2 line 65 to col. 4 line 30, this portion of which is also incorporated herein by reference. By "blocked" is meant that the isocyanate groups have been reacted with a compound such that the resultant blocked isocyanate group is stable to active hydrogens at ambient temperature but reactive with active hydrogens in the film forming polymer at elevated temperatures, such as between 90°C and 200°C. The polyisocyanate curing agent may be a fully blocked polyisocyanate with substantially no free isocyanate groups.

The polyisocyanate curing agent may comprise a diisocyanate, higher functional polyisocyanates or combinations thereof. For example, the polyisocyanate curing agent may comprise aliphatic and/or aromatic polyisocyanates. Aliphatic polyisocyanates may include (i) alkylene isocyanates, such as trimethylene diisocyanate, tetramethylene diisocyanate, pentamethylene diisocyanate, hexamethylene diisocyanate ("HDI"), 1,2-propylene diisocyanate, 1,2-butylene diisocyanate, 2,3-butylene diisocyanate, 1,3-butylene diisocyanate, ethylidene diisocyanate, and butylidene diisocyanate, and (ii) cycloalkylene isocyanates, such as 1,3-cyclopentane diisocyanate, 1,4-cyclohexane diisocyanate, 1,2-cyclohexane diisocyanate, isophorone diisocyanate, methylene bis(4-cyclohexylisocyanate) ("HMDI"), the cyclo-trimer of 1,6-hexmethylene diisocyanate (also known as the isocyanurate trimer of HDI, commercially available as Desmodur N3300 from Convestro AG), and meta-tetramethylxylylene diisocyanate (commercially available as TMXDI^{®} from Allnex SA). Aromatic polyisocyanates may include (i) arylene isocyanates, such as m-phenylene diisocyanate, p-phenylene diisocyanate, 1,5-naphthalene diisocyanate and 1,4-naphthalene diisocyanate, and (ii) alkarylene isocyanates, such as 4,4'-diphenylene methane ("MDI"), 2,4-tolylene or 2,6-tolylene diisocyanate ("TDI"), or mixtures thereof, 4,4-toluidine diisocyanate and xylylene diisocyanate. Triisocyanates, such as triphenyl methane-4,4',4"-triisocyanate, 1,3,5-triisocyanato benzene and 2,4,6-triisocyanato toluene, tetraisocyanates, such as 4,4'-diphenyldimethyl methane-2,2',5,5'-tetraisocyanate, and polymerized polyisocyanates, such as tolylene diisocyanate dimers and trimers and the like, may also be used. The curing agent may comprise a blocked polyisocyanate selected from a polymeric polyisocyanate, such as polymeric HDI, polymeric MDI, polymeric isophorone diisocyanate, and the like. The curing agent may also comprise a blocked trimer of hexamethylene diisocyanate available as Desmodur N3300^{®} from Covestro AG. Mixtures of polyisocyanate curing agents may also be used.

The polyisocyanate curing agent may be at least partially blocked with at least one blocking agent selected from a 1,2-alkane diol, for example, 1,2-propanediol; a 1,3-alkane diol, for example, 1,3-butanediol; a benzylic alcohol, for example, benzyl alcohol; an allylic alcohol, for example, allyl alcohol; caprolactam; a dialkylamine, for example dibutylamine; and mixtures thereof. The polyisocyanate curing agent may be at least partially blocked with at least one 1,2-alkane diol having three or more carbon atoms, for example, 1,2-butanediol.

Other suitable blocking agents include aliphatic, cycloaliphatic, or aromatic alkyl monoalcohols or phenolic compounds, including, for example, lower aliphatic alcohols, such as methanol, ethanol, and n-butanol; cycloaliphatic alcohols, such as cyclohexanol; aromatic-alkyl alcohols, such as phenyl carbinol and methylphenyl carbinol; and phenolic compounds, such as phenol itself and substituted phenols wherein the substituents do not affect coating operations, such as cresol and nitrophenol. Glycol ethers and glycol amines may also be used as blocking agents. Suitable glycol ethers include ethylene glycol butyl ether, diethylene glycol butyl ether, ethylene glycol methyl ether and propylene glycol methyl ether. Other suitable blocking agents include oximes, such as methyl ethyl ketoxime, acetone oxime and cyclohexanone oxime.

The blocking agent may also comprise an alpha-hydroxy amide, ester or thioester. As used herein, the term "alpha-hydroxy amide" refers to an organic compound having at least one alpha-hydroxy amide moiety that includes a hydroxyl functional group covalently bonded to an alpha-carbon of an amide group. As used herein, the term "alpha-hydroxy ester" refers to an organic compound having at least one alpha-hydroxy ester moiety that includes a hydroxyl functional group covalently bonded to an alpha-carbon of an ester group. As used herein, the term "alpha-hydroxy thioester" refers to an organic compound having at least one alpha-hydroxy thioester moiety that includes a hydroxyl functional group covalently bonded to an alpha-carbon of a thioester group. The blocking agent comprising an alpha-hydroxy amide, ester or thioester may comprise a compound of structure (I): 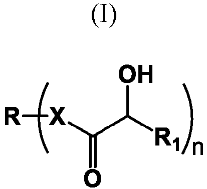 wherein X is N(R₂), O, S; n is 1 to 4; when n = 1 and X = N(R₂), R is hydrogen, a C₁ to C₁₀ alkyl group, an aryl group, a polyether, a polyester, a polyurethane, a hydroxy-alkyl group, or a thio-alkyl group; when n = 1 and X = O or S, R is a C₁ to C₁₀ alkyl group, an aryl group, a polyether, a polyester, a polyurethane, a hydroxy-alkyl group, or a thio-alkyl group; when n = 2 to 4, R is a multi-valent C₁ to C₁₀ alkyl group, a multi-valent aryl group, a multi-valent polyether, a multi-valent polyester, a multi-valent polyurethane; each R₁ is independently hydrogen, a C₁ to C₁₀ alkyl group, an aryl group, or a cycloaliphatic group; each R₂ is independently hydrogen, a C₁ to C₁₀ alkyl group, an aryl group, a cycloaliphatic group, a hydroxy-alkyl group, or a thio-alkyl group; and R and R₂ together can form a cycloaliphatic, heterocyclic structure. The cycloaliphatic, heterocyclic structure may comprise, for example, morpholine, piperidine, or pyrrolidine. It should be noted that R can only be hydrogen if X is N(R₂). Specific examples of suitable alph-hydroxide amide, ester, or thioester blocking agents are described in International Publication No. WO 2018/148306 A1, at par. [0012] to [0026], the cited portion of which is incorporated herein by reference.

The curing agent may comprise an aminoplast resin. Aminoplast resins are condensation products of an aldehyde with an amino- or amido-group carrying substance. Condensation products obtained from the reaction of alcohols and an aldehyde with melamine, urea or benzoguanamine may be used. However, condensation products of other amines and amides may also be employed, for example, aldehyde condensates of triazines, diazines, triazoles, guanidines, guanamines and alkyl- and aryl-substituted derivatives of such compounds, including alkyl- and aryl-substituted ureas and alkyl- and aryl-substituted melamines. Some examples of such compounds are N,N'-dimethyl urea, benzourea, dicyandiamide, formaguanamine, acetoguanamine, ammeline, 2-chloro-4,6-diamino-1,3,5-triazine, 6-methyl-2,4-diamino-1,3,5-triazine, 3,5-diaminotriazole, triaminopyrimidine, 2-mercapto-4,6-diaminopyrimidine, 3,4,6-tris(ethylamino)-1,3,5-triazine, and the like. Suitable aldehydes include formaldehyde, acetaldehyde, crotonaldehyde, acrolein, benzaldehyde, furfural, glyoxal and the like.

The aminoplast resins may contain methylol or similar alkylol groups, and at least a portion of these alkylol groups may be etherified by a reaction with an alcohol to provide organic solvent-soluble resins. Any monohydric alcohol may be employed for this purpose, including such alcohols as methanol, ethanol, propanol, butanol, pentanol, hexanol, heptanol and others, as well as benzyl alcohol and other aromatic alcohols, cyclic alcohol such as cyclohexanol, monoethers of glycols such as Cello solves and Carbitols, and halogen-substituted or other substituted alcohols, such as 3-chloropropanol and butoxyethanol.

Non-limiting examples of commercially available aminoplast resins are those available under the trademark CYMEL^{®} from Allnex Belgium SA/NV, such as CYMEL 1130 and 1156, and RESIMENE^{®} from INEOS Melamines, such as RESIMENE 750 and 753. Examples of suitable aminoplast resins also include those described in U.S. Patent No. 3,937,679 at col. 16, line 3 to col. 17, line 47, this portion of which being hereby incorporated by reference. As is disclosed in the aforementioned portion of the '679 patent, the aminoplast may be used in combination with the methylol phenol ethers.

Phenoplast resins are formed by the condensation of an aldehyde and a phenol. Suitable aldehydes include formaldehyde and acetaldehyde. Methylene-releasing and aldehyde-releasing agents, such as paraformaldehyde and hexamethylene tetramine, may also be utilized as the aldehyde agent. Various phenols may be used, such as phenol itself, a cresol, or a substituted phenol in which a hydrocarbon radical having either a straight chain, a branched chain or a cyclic structure is substituted for a hydrogen in the aromatic ring. Mixtures of phenols may also be employed. Some specific examples of suitable phenols are p-phenylphenol, p-tert-butylphenol, p-tert-amylphenol, cyclopentylphenol and unsaturated hydrocarbon-substituted phenols, such as the monobutenyl phenols containing a butenyl group in ortho, meta or para position, and where the double bond occurs in various positions in the hydrocarbon chain.

Aminoplast and phenoplast resins, as described above, are described in U.S. Patent No. 4,812,215 at co1.6, line 20 to col. 7, line 12, the cited portion of which being incorporated herein by reference.

The curing agent may optionally comprise a high molecular weight volatile group. As used herein, the term "high molecular weight volatile group" refers to blocking agents and other organic byproducts that are produced and volatilized during the curing reaction of the coating composition having a molecular weight of at least 70 g/mol, such as at least 125 g/mol, such as at least 160 g/mol, such as at least 195 g/mol, such as at least 400 g/mol, such as at least 700 g/mol, such as at least 1000 g/mol, or higher, and may range from 70 to 1,000 g/mol, such as 160 to 1,000 g/mol, such as 195 to 1,000 g/mol, such as 400 to 1,000 g/mol, such as 700 to 1,000 g/mol. For example, the organic byproducts may include alcoholic byproducts resulting from the reaction of the film-forming polymer and an aminoplast or phenoplast curing agent, and the blocking agents may include organic compounds, including alcohols, used to block isocyanato groups of polyisocyanates that are unblocked during cure. For clarity, the high molecular weight volatile groups are covalently bound to the curing agent prior to cure, and explicitly exclude any organic solvents that may be present in the coating composition. Upon curing, the pigment-to-binder ratio of the deposited film may increase in the cured film relative to deposited uncured pigment to binder ratio in the coating composition because of the loss of a higher mass of the blocking agents and other organic byproducts derived from the curing agent that are volatilized during cure. High molecular weight volatile groups may comprise 5% to 50% by weight of the film-forming binder, such as 7% to 45% by weight, such as 9% to 40% by weight, such as 11% to 35%, such as 13% to 30%, based on the total weight of the film-forming binder. The high molecular weight volatile groups and other lower molecular weight volatile organic compounds produced during cure, such as lower molecular weight blocking agents and organic byproducts produced during cure, may be present in an amount such that the relative weight loss of the film-forming binder deposited onto the substrate relative to the weight of the film-forming binder after cure is an amount of 5% to 50% by weight of the film-forming binder, such as 7% to 45% by weight, such as 9% to 40% by weight, such as 11% to 35%, such as 13% to 30%, based on the total weight of the film-forming binder before and after cure.

The curing agent may be present in the anionic electrodepositable coating composition in an amount of at least 10% by weight, such as at least 20% by weight, such as at least 25% by weight, and may be present in an amount of no more than 50% by weight, such as no more than 45% by weight, such as no more than 40% by weight, based on the total weight of the resin solids of the electrodepositable coating composition. The curing agent may be present in the anionic electrodepositable coating composition in an amount of 10% to 50% by weight, such as 20% to 45% by weight, such as 25% to 40% by weight, based on the total weight of the resin solids of the electrodepositable coating composition.

The anionic electrodepositable coating compositions according to the present disclosure may optionally comprise one or more further components in addition to the anionic salt group-containing film-forming polymer and the curing agent described above.

According to the present disclosure, the electrodepositable coating composition may optionally comprise a catalyst to catalyze the reaction between the curing agent and the polymers. Examples of catalysts suitable for anionic electrodepositable coating compositions include latent acid catalysts, specific examples of which are identified in WO 2007/118024 at [0031] and include, but are not limited to, ammonium hexafluoroantimonate, quaternary salts of SbF₆ (e.g., NACURE^{®} XC-7231), t-amine salts of SbF₆ (e.g., NACURE^{®} XC-9223), Zn salts of triflic acid (e.g., NACURE^{®} A202 and A218), quaternary salts of triflic acid (e.g., NACURE^{®} XC-A230), and diethylamine salts of triflic acid (e.g., NACURE^{®} A233), all commercially available from King Industries, and/or mixtures thereof. Latent acid catalysts may be formed by preparing a derivative of an acid catalyst such as para-toluenesulfonic acid (pTSA) or other sulfonic acids. For example, a well-known group of blocked acid catalysts are amine salts of aromatic sulfonic acids, such as pyridinium para-toluenesulfonate. Such sulfonate salts are less active than the free acid in promoting crosslinking. During cure, the catalysts may be activated by heating.

According to the present disclosure, the electrodepositable coating composition may comprise other optional ingredients, such as a pigment composition and, if desired, various additives such as fillers, plasticizers, anti-oxidants, biocides, UV light absorbers and stabilizers, hindered amine light stabilizers, defoamers, fungicides, dispersing aids, flow control agents, surfactants, wetting agents, or combinations thereof. Alternatively, the electrodepositable coating composition may be completely free of any of the optional ingredients, i.e., the optional ingredient is not present in the electrodepositable coating composition. The pigment composition may comprise, for example, iron oxides, lead oxides, strontium chromate, carbon black, coal dust, titanium dioxide, talc, barium sulfate, as well as color pigments such as cadmium yellow, cadmium red, chromium yellow and the like. The pigment content of the dispersion may be expressed as the pigment-to-resin weight ratio, and may be within the range of 0.03 to 0.6, when pigment is used. The other additives mentioned above may be present in the electrodepositable coating composition in amounts of 0.01% to 3% by weight, based on total weight of the resin solids of the electrodepositable coating composition.

The electrodepositable coating composition may optionally further comprise a corrosion inhibitor. The corrosion inhibitor may comprise an azole, a calcium ion-exchanged silica, or any combination thereof.

Non-limiting examples of suitable calcium ion-exchanged silica is commercially available from W. R. Grace & Co. as SHIELDEX AC3 and/or SHIELDEX. C303.

Non-limiting examples of suitable azoles include benzotriazole, 5-methyl benzotriazole, 2-amino thiazole, as well as salts thereof.

The corrosion inhibitor(s) may be present, if at all, in the anionic electrodepositable coating composition in an amount of at least 0.001% by weight, such as at least 5% by weight, based on the total weight of the electrodepositable coating composition. The corrosion inhibitor(s) may be present, if at all, in the anionic electrodepositable coating composition in an amount of no more than 25% by weight, such as no more than 15% by weight, such as no more than 10% by weight, based on the total weight of the electrodepositable coating composition. The corrosion inhibitor(s) may be present, if at all, in the anionic electrodepositable coating composition in an amount of 0.001% to 25% by weight, such as 0.001% to 15% by weight, such as 0.001% to 10% by weight, such as 5% to 25% by weight, such as 5% to 15% by weight, such as 5% to 10% by weight, based on the total weight of the electrodepositable coating composition.

Alternatively, the electrodepositable coating composition may be substantially free, essentially free, or completely free of a corrosion inhibitor.

According to the present disclosure, the electrodepositable coating composition may comprise water and/or one or more organic solvent(s). Water can for example be present in amounts of 40% to 90% by weight, such as 50% to 75% by weight, based on total weight of the electrodepositable coating composition. Examples of suitable organic solvents include oxygenated organic solvents, such as monoalkyl ethers of ethylene glycol, diethylene glycol, propylene glycol, and dipropylene glycol which contain from 1 to 10 carbon atoms in the alkyl group, such as the monoethyl and monobutyl ethers of these glycols. Examples of other at least partially water-miscible solvents include alcohols such as ethanol, isopropanol, butanol and diacetone alcohol. If used, the organic solvents may typically be present in an amount of less than 10% by weight, such as less than 5% by weight, based on total weight of the electrodepositable coating composition. The electrodepositable coating composition may in particular be provided in the form of a dispersion, such as an aqueous dispersion.

According to the present disclosure, the total solids content of the electrodepositable coating composition may be at least 1% by weight, such as at least 5% by weight, and may be no more than 50% by weight, such as no more than 40% by weight, such as no more than 20% by weight, based on the total weight of the electrodepositable coating composition. The total solids content of the electrodepositable coating composition may be from 1% to 50% by weight, such as 5% to 40% by weight, such as 5% to 20% by weight, based on the total weight of the electrodepositable coating composition. As used herein, "total solids" refers to the non-volatile content of the electrodepositable coating composition, i.e., materials which will not volatilize when heated to 110°C for 15 minutes.

### Non-Electrodepositable Coating Composition

According to the present disclosure, the system for coating a metal substrate further comprises a non-electrodepositable coating composition comprising a corrosion inhibitor comprising an azole.

The non-electrodepositable coating composition comprises a curable, organic film-forming binder.

As used herein, the term "curable" and like terms refers to compositions that undergo a reaction in which they "set" irreversibly, such as when the components of the composition react with each other and the polymer chains of the polymeric components are joined together by covalent bonds. This property is usually associated with a crosslinking reaction of the composition constituents often induced, for example, by heat or radiation. See Hawley, Gessner G., The Condensed Chemical Dictionary, Ninth Edition., page 856; Surface Coatings, vol. 2, Oil and Colour Chemists' Association, Australia, TAFE Educational Books (1974). Curing or crosslinking reactions also may be carried out under ambient conditions. By ambient conditions is meant that the coating undergoes a thermosetting reaction without the aid of heat or other energy, for example, without baking in an oven, use of forced air, or the like. Usually ambient temperature ranges from 60 to 90°F (15.6 to 32.2°C), such as a typical room temperature, 72°F (22.2°C). Once cured or crosslinked, a thermosetting resin will not melt upon the application of heat and is insoluble in solvents.

The organic film-forming binder may comprise (a) a resin component comprising reactive functional groups; and (b) a curing agent component comprising functional groups that are reactive with the functional groups in the resin component (a), although the film-forming binder component may also contain resin that will crosslink with itself rather than an additional curing agent (i.e., self-crosslinking).

The resin component (a) used in the organic film-forming binder component of the curable film-forming compositions of the present disclosure may comprise one or more of acrylic polymers, polyesters, polyurethanes, polyamides, polyethers, polythioethers, polythioesters, polythiols, polyenes, polyols, polysilanes, polysiloxanes, fluoropolymers, polycarbonates, and epoxy resins. Generally these compounds, which need not be polymeric, can be made by any method known to those skilled in the art. The functional groups on the film-forming binder may comprise at least one of carboxylic acid groups, amine groups, epoxide groups, hydroxyl groups, thiol groups, carbamate groups, amide groups, urea groups, (meth)acrylate groups, styrenic groups, vinyl groups, allyl groups, aldehyde groups, acetoacetate groups, hydrazide groups, cyclic carbonate, and maleic acid or anhydride groups. The functional groups on the film-forming binder are selected so as to be reactive with those on the curing agent (b) or to be self-crosslinking.

Suitable acrylic compounds include copolymers of one or more alkyl esters of acrylic acid or methacrylic acid, optionally together with one or more other polymerizable ethylenically unsaturated monomers. Useful alkyl esters of acrylic acid or methacrylic acid include aliphatic alkyl esters containing from 1 to 30, and often 4 to 18 carbon atoms in the alkyl group. Non-limiting examples include methyl methacrylate, ethyl methacrylate, butyl methacrylate, ethyl acrylate, butyl acrylate, and 2-ethyl hexyl acrylate. Suitable other copolymerizable ethylenically unsaturated monomers include vinyl aromatic compounds such as styrene and vinyl toluene; nitriles such as acrylonitrile and methacrylonitrile; vinyl and vinylidene halides such as vinyl chloride and vinylidene fluoride and vinyl esters such as vinyl acetate.

The acrylic copolymer can include hydroxyl functional groups, which are often incorporated into the polymer by including one or more hydroxyl functional monomers in the reactants used to produce the copolymer. Useful hydroxyl functional monomers include hydroxyalkyl acrylates and methacrylates, typically having 2 to 4 carbon atoms in the hydroxyalkyl group, such as hydroxyethyl acrylate, hydroxypropyl acrylate, 4-hydroxybutyl acrylate, hydroxy functional adducts of caprolactone and hydroxyalkyl acrylates, and corresponding methacrylates, as well as the beta-hydroxy ester functional monomers described below. The acrylic polymer can also be prepared with N-(alkoxymethyl)acrylamides and N-(alkoxymethyl)methacrylamides.

Beta-hydroxy ester functional monomers can be prepared from ethylenically unsaturated, epoxy functional monomers and carboxylic acids having from about 13 to about 20 carbon atoms, or from ethylenically unsaturated acid functional monomers and epoxy compounds containing at least 5 carbon atoms that are not polymerizable with the ethylenically unsaturated acid functional monomer.

Useful ethylenically unsaturated, epoxy functional monomers used to prepare the beta-hydroxy ester functional monomers include glycidyl acrylate, glycidyl methacrylate, allyl glycidyl ether, methallyl glycidyl ether, 1: 1 (molar) adducts of ethylenically unsaturated monoisocyanates with hydroxy functional monoepoxides such as glycidol, and glycidyl esters of polymerizable polycarboxylic acids such as maleic acid. (Note: these epoxy functional monomers may also be used to prepare epoxy functional acrylic polymers.) Examples of carboxylic acids include saturated monocarboxylic acids such as isostearic acid and aromatic unsaturated carboxylic acids.

Useful ethylenically unsaturated acid functional monomers used to prepare the beta-hydroxy ester functional monomers include monocarboxylic acids such as acrylic acid, methacrylic acid, crotonic acid; dicarboxylic acids such as itaconic acid, maleic acid and fumaric acid; and monoesters of dicarboxylic acids such as monobutyl maleate and monobutyl itaconate. The ethylenically unsaturated acid functional monomer and epoxy compound are typically reacted in a 1:1 equivalent ratio. The epoxy compound does not contain ethylenic unsaturation that would participate in free radical-initiated polymerization with the unsaturated acid functional monomer. Useful epoxy compounds include 1,2-pentene oxide, styrene oxide and glycidyl esters or ethers, often containing from 8 to 30 carbon atoms, such as butyl glycidyl ether, octyl glycidyl ether, phenyl glycidyl ether and para-(tertiary butyl) phenyl glycidyl ether. Particular glycidyl esters include those of the structure: 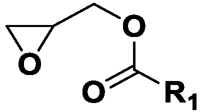 where R₁ is a hydrocarbon radical containing from about 4 to about 26 carbon atoms. Typically, R is a branched hydrocarbon group having from about 8 to about 10 carbon atoms, such as neopentanoate, neoheptanoate or neodecanoate. Suitable glycidyl esters of carboxylic acids include VERSATIC ACID 911 and CARDURA E, each of which is commercially available from Shell Chemical Co.

Carbamate functional groups can be included in the acrylic polymer by copolymerizing the acrylic monomers with a carbamate functional vinyl monomer, such as a carbamate functional alkyl ester of methacrylic acid, or by reacting a hydroxyl functional acrylic polymer with a low molecular weight carbamate functional material, such as can be derived from an alcohol or glycol ether, via a transcarbamoylation reaction. In this reaction, a low molecular weight carbamate functional material derived from an alcohol or glycol ether is reacted with the hydroxyl groups of the acrylic polyol, yielding a carbamate functional acrylic polymer and the original alcohol or glycol ether. The low molecular weight carbamate functional material derived from an alcohol or glycol ether may be prepared by reacting the alcohol or glycol ether with urea in the presence of a catalyst. Suitable alcohols include lower molecular weight aliphatic, cycloaliphatic, and aromatic alcohols such as methanol, ethanol, propanol, butanol, cyclohexanol, 2-ethylhexanol, and 3-methylbutanol. Suitable glycol ethers include ethylene glycol methyl ether and propylene glycol methyl ether. Propylene glycol methyl ether and methanol are most often used. Other carbamate functional monomers as known to those skilled in the art may also be used.

Amide functionality may be introduced to the acrylic polymer by using suitably functional monomers in the preparation of the polymer, or by converting other functional groups to amido- groups using techniques known to those skilled in the art. Likewise, other functional groups may be incorporated as desired using suitably functional monomers if available or conversion reactions as necessary.

Acrylic polymers can be prepared via aqueous emulsion polymerization techniques and used directly in the preparation of aqueous coating compositions or can be prepared via organic solution polymerization techniques for solventborne compositions. When prepared via organic solution polymerization with groups capable of salt formation such as acid or amine groups, upon neutralization of these groups with a base or acid the polymers can be dispersed into aqueous medium. Generally, any method of producing such polymers that is known to those skilled in the art utilizing art recognized amounts of monomers can be used.

The resin component (a) in the film-forming binder component of the curable film-forming composition may comprise an alkyd resin or a polyester. Such polymers may be prepared in a known manner by condensation of polyhydric alcohols and polycarboxylic acids. Suitable polyhydric alcohols include, but are not limited to, ethylene glycol, propylene glycol, butylene glycol, 1,6-hexylene glycol, neopentyl glycol, diethylene glycol, glycerol, trimethylol propane, and pentaerythritol. Suitable polycarboxylic acids include, but are not limited to, succinic acid, adipic acid, azelaic acid, sebacic acid, maleic acid, fumaric acid, phthalic acid, tetrahydrophthalic acid, hexahydrophthalic acid, and trimellitic acid. Besides the polycarboxylic acids mentioned above, functional equivalents of the acids such as anhydrides where they exist or lower alkyl esters of the acids such as the methyl esters may be used. Where it is desired to produce air-drying alkyd resins, suitable drying oil fatty acids may be used and include, for example, those derived from linseed oil, soya bean oil, tall oil, dehydrated castor oil, or tung oil.

Likewise, polyamides may be prepared utilizing polyacids and polyamines. Suitable polyacids include those listed above and polyamines may be comprise, for example, ethylene diamine, 1,2-diaminopropane, 1,4-diaminobutane, 1,3-diaminopentane, 1,6-diaminohexane, 2-methyl-1,5-pentane diamine, 2,5-diamino-2,5-dimethylhexane, 2,2,4- and/or 2,4,4-trimethyl-1,6-diamino-hexane, 1,11-diaminoundecane, 1,12-diaminododecane, 1,3- and/or 1,4-cyclohexane diamine, 1-amino-3,3,5-trimethyl-5-aminomethyl-cyclohexane, 2,4- and/or 2,6-hexahydrotoluylene diamine, 2,4'- and/or 4,4'-diamino-dicyclohexyl methane and 3,3'-dialkyl4,4'-diamino-dicyclohexyl methanes (such as 3,3'-dimethyl-4,4'-diamino-dicyclohexyl methane and 3,3'-diethyl-4,4'-diamino-dicyclohexyl methane), 2,4- and/or 2,6-diaminotoluene and 2,4'- and/or 4,4'-diaminodiphenyl methane.

Carbamate functional groups may be incorporated into the polyester or polyamide by first forming a hydroxyalkyl carbamate which can be reacted with the polyacids and polyols/polyamines used in forming the polyester or polyamide. The hydroxyalkyl carbamate is condensed with acid functionality on the polymer, yielding terminal carbamate functionality. Carbamate functional groups may also be incorporated into the polyester by reacting terminal hydroxyl groups on the polyester with a low molecular weight carbamate functional material via a transcarbamoylation process similar to the one described above in connection with the incorporation of carbamate groups into the acrylic polymers, or by reacting isocyanic acid with a hydroxyl functional polyester.

Other functional groups such as amine, amide, thiol, urea, or others listed above may be incorporated into the polyamide, polyester or alkyd resin as desired using suitably functional reactants if available, or conversion reactions as necessary to yield the desired functional groups. Such techniques are known to those skilled in the art.

Polyurethanes can also be used as the resin component (a) in the film-forming binder component of the curable film-forming composition. Among the polyurethanes that can be used are polymeric polyols, which generally are prepared by reacting the polyester polyols or acrylic polyols such as those mentioned above with a polyisocyanate such that the OH/NCO equivalent ratio is greater than 1:1 so that free hydroxyl groups are present in the product. The organic polyisocyanate that is used to prepare the polyurethane polyol can be an aliphatic or an aromatic polyisocyanate or a mixture of the two. Diisocyanates are typically used, although higher polyisocyanates can be used in place of or in combination with diisocyanates. Examples of suitable aromatic diisocyanates are 4,4'-diphenylmethane diisocyanate and toluene diisocyanate. Examples of suitable aliphatic diisocyanates are straight chain aliphatic diisocyanates such as 1,6-hexamethylene diisocyanate. Also, cycloaliphatic diisocyanates can be employed. Examples include isophorone diisocyanate and 4,4'-methylene-bis-(cyclohexyl isocyanate). Examples of suitable higher polyisocyanates are 1,2,4-benzene triisocyanate polymethylene polyphenyl isocyanate, and isocyanate trimers based on 1,6-hexamethylene diisocyanate or isophorone diisocyanate. As with the polyesters, the polyurethanes can be prepared with unreacted carboxylic acid groups, which, upon neutralization with bases such as amines, allows for dispersion into aqueous medium.

Terminal and/or pendent carbamate functional groups can be incorporated into the polyurethane by reacting a polyisocyanate with a polymeric polyol containing the terminal/pendent carbamate groups. Alternatively, carbamate functional groups can be incorporated into the polyurethane by reacting a polyisocyanate with a polyol and a hydroxyalkyl carbamate or isocyanic acid as separate reactants. Carbamate functional groups can also be incorporated into the polyurethane by reacting a hydroxyl functional polyurethane with a low molecular weight carbamate functional material via a transcarbamoylation process similar to the one described above in connection with the incorporation of carbamate groups into the acrylic polymer. Additionally, an isocyanate functional polyurethane can be reacted with a hydroxyalkyl carbamate to yield a carbamate functional polyurethane.

Other functional groups such as amide, thiol, urea, or others listed above may be incorporated into the polyurethane as desired using suitably functional reactants if available, or conversion reactions as necessary to yield the desired functional groups. Such techniques are known to those skilled in the art.

Examples of polyether polyols are polyalkylene ether polyols which include those having the following structural formula:
(i) 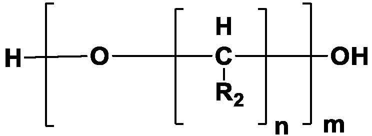
or (ii) 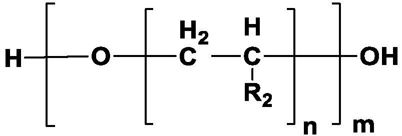 where the substituent R₂ is hydrogen or lower alkyl containing from 1 to 5 carbon atoms including mixed substituents, n is typically from 2 to 6 and m is from 8 to 100 or higher. Included are poly(oxytetramethylene) glycols, poly(oxytetraethylene) glycols, poly(oxy-1,2-propylene) glycols, and poly(oxy-1,2-butylene) glycols.

Also useful are polyether polyols formed from oxyalkylation of various polyols, for example, diols such as ethylene glycol, 1,6-hexanediol, Bisphenol A and the like, or other higher polyols such as trimethylolpropane, pentaerythritol, and the like. Polyols of higher functionality which can be utilized as indicated can be made, for instance, by oxyalkylation of compounds such as sucrose or sorbitol. One commonly utilized oxyalkylation method is reaction of a polyol with an alkylene oxide, for example, propylene or ethylene oxide, in the presence of an acidic or basic catalyst. Particular polyethers include those sold under the names TERATHANE and TERACOL, available from The Lycra Company, and POLYMEG, available from LyondellBasell.

Carbamate functional groups may be incorporated into the polyethers by a transcarbamoylation reaction. Other functional groups such as acid, amine, epoxide, amide, thiol, and urea may be incorporated into the polyether as desired using suitably functional reactants if available, or conversion reactions as necessary to yield the desired functional groups. Examples of suitable amine functional polyethers include those sold under the name JEFFAMINE, such as JEFFAMINE D2000, a polyether functional diamine available from Huntsman Corporation.

Suitable epoxy functional polymers for use as the resin component (a) may include a polyepoxide chain extended by reacting together a polyepoxide and a polyhydroxyl group-containing material selected from alcoholic hydroxyl group-containing materials and phenolic hydroxyl group-containing materials to chain extend or build the molecular weight of the polyepoxide.

A chain extended polyepoxide is typically prepared by reacting together the polyepoxide and polyhydroxyl group-containing material neat or in the presence of an inert organic solvent such as a ketone, including methyl isobutyl ketone and methyl amyl ketone, aromatics such as toluene and xylene, and glycol ethers such as the dimethyl ether of diethylene glycol. The reaction is usually conducted at a temperature of 80°C to 160°C for 30 to 180 minutes until an epoxy group-containing resinous reaction product is obtained.

The equivalent ratio of reactants, i.e., epoxy:polyhydroxyl group-containing material is typically from about 1.00:0.75 to 1.00:2.00. It will be appreciated by one skilled in the art that the chain extended polyepoxide will lack epoxide functional groups when reacted with the polyhydroxyl group-containing material such that an excess of hydroxyl functional groups are present. The resulting polymer will comprise hydroxyl functional groups resulting from the excess of hydroxyl functional groups and the hydroxyl functional groups produced by the ring-opening reaction of the epoxide functional groups.

The polyepoxide by definition has at least two 1,2-epoxy groups. In general, the epoxide equivalent weight of the polyepoxide may range from 100 to 2000, such as from 180 to 500. The epoxy compounds may be saturated or unsaturated, cyclic or acyclic, aliphatic, alicyclic, aromatic or heterocyclic. They may contain substituents such as halogen, hydroxyl, and ether groups.

Examples of polyepoxides are those having a 1,2-epoxy equivalency of one to two, such as greater than one and less than two or of two; that is, polyepoxides that have on average two epoxide groups per molecule. The most commonly used polyepoxides are polyglycidyl ethers of cyclic polyols, for example, polyglycidyl ethers of polyhydric phenols such as Bisphenol A, resorcinol, hydroquinone, benzenedimethanol, phloroglucinol, and catechol; or polyglycidyl ethers of polyhydric alcohols such as alicyclic polyols, particularly cycloaliphatic polyols such as 1,2-cyclohexane diol, 1,4-cyclohexane diol, 2,2-bis(4-hydroxycyclohexyl)propane, 1,1-bis(4-hydroxycyclohexyl)ethane, 2-methyl-1,1-bis(4-hydroxycyclohexyl)propane, 2,2-bis(4-hydroxy-3-tertiarybutylcyclohexyl)propane, 1,3-bis(hydroxymethyl)cyclohexane and 1,2-bis(hydroxymethyl)cyclohexane. Examples of aliphatic polyols include, *inter alia,* trimethylpentanediol and neopentyl glycol.

Polyhydroxyl group-containing materials used to chain extend or increase the molecular weight of the polyepoxide may additionally be polymeric polyols such as any of those disclosed above. The present disclosure may comprise epoxy resins such as diglycidyl ethers of Bisphenol A, Bisphenol F, glycerol, novolacs, and the like. Exemplary suitable polyepoxides are described in U.S. Patent No. 4,681,811 at column 5, lines 33 to 58, the cited portion of which is incorporated by reference herein. Non-limiting examples of suitable commercially available epoxy resins include EPON 828 and EPON 1001, both available from Momentive, and D.E.N. 431 available from Dow Chemical Co.

Epoxy functional film-forming polymers may alternatively be acrylic polymers prepared with epoxy functional monomers such as glycidyl acrylate, glycidyl methacrylate, allyl glycidyl ether, and methallyl glycidyl ether. Polyesters, polyurethanes, or polyamides prepared with glycidyl alcohols or glycidyl amines, or reacted with an epihalohydrin are also suitable epoxy functional resins. Epoxide functional groups may be incorporated into a resin by reacting hydroxyl groups on the resin with an epihalohydrin or dihalohydrin such as epichlorohydrin or dichlorohydrin in the presence of alkali.

Nonlimiting examples of suitable fluoropolymers include fluoroethylene-alkyl vinyl ether alternating copolymers (such as those described in U.S. Patent No. 4,345,057) available from Asahi Glass Company under the name LUMIFLON; fluoroaliphatic polymeric esters commercially available from 3M of St. Paul, Minnesota under the name FLUORAD; and perfluorinated hydroxyl functional (meth)acrylate resins.

The amount of resin component (a) in the curable film-forming composition may range from 10 to 90% by weight, based on the total weight of resin solids in the curable film-forming composition. For example, the minimum amount of resin component may be at least 10% by weight, such as at least 20% by weight or at least 30% by weight, based on the total weight of resin solids in the curable film-forming composition. The maximum amount of resin may be 90% by weight, such as 80% by weight, or 70% by weight. Ranges of resin component may include, for example, 20 to 80% by weight, 50 to 90% by weight, 60 to 80% by weight, 25 to 75% by weight, based on the total weight of resin solids in the curable film-forming composition.

According to the present disclosure, the film-forming binder of the coating composition of the present disclosure may further comprise a curing agent. The curing agent may react with the reactive groups, such as active hydrogen groups, of the anionic salt group-containing film-forming polymer to effectuate cure of the coating composition to form a coating. As used herein, the term "cure", "cured" or similar terms, as used in connection with the coating compositions described herein, means that at least a portion of the components that form the coating composition are crosslinked to form a coating. Additionally, curing of the coating composition refers to subjecting said composition to curing conditions (e.g., elevated temperature) leading to the reaction of the reactive functional groups of the components of the coating composition, and resulting in the crosslinking of the components of the composition and formation of an at least partially cured coating. Non-limiting examples of suitable curing agents are at least partially blocked polyisocyanates, aminoplast resins and phenoplast resins, such as phenolformaldehyde condensates including allyl ether derivatives thereof.

According to the present disclosure, the film-forming binder component of the non-electrodepositable coating composition may further comprise a curing agent (b). Suitable curing agents (b) for use in the film-forming binder component of the coating compositions of the present disclosure include aminoplasts, polyisocyanates, including blocked isocyanates, polyepoxides, beta-hydroxyalkylamides, polyacids, organometallic acid-functional materials, polyamines, polyamides, polysulfides, polythiols, polyenes such as polyacrylates, polyols, polysilanes and mixtures of any of the foregoing, and include those known in the art for any of these materials. The terms "curing agent" "crosslinking agent" and "crosslinker" are herein used interchangeably.

Useful aminoplasts can be obtained from the condensation reaction of formaldehyde with an amine or amide. Nonlimiting examples of amines or amides include melamine, urea and benzoguanamine.

Although condensation products obtained from the reaction of alcohols and formaldehyde with melamine, urea or benzoguanamine are most common, condensates with other amines or amides can be used. Formaldehyde is the most commonly used aldehyde, but other aldehydes such as acetaldehyde, crotonaldehyde, and benzaldehyde can also be used.

The aminoplast can contain imino and methylol groups. In certain instances, at least a portion of the methylol groups can be etherified with an alcohol to modify the cure response. Any monohydric alcohol like methanol, ethanol, n-butyl alcohol, isobutanol, and hexanol can be employed for this purpose. Nonlimiting examples of suitable aminoplast resins are commercially available from Allnex, under the trademark CYMEL and from INEOS under the trademark RESIMENE.

Other crosslinking agents suitable for use include polyisocyanate crosslinking agents. As used herein, the term "polyisocyanate" is intended to include blocked (or capped) polyisocyanates as well as unblocked polyisocyanates. The polyisocyanate can be aliphatic, aromatic, or a mixture thereof. Although higher polyisocyanates such as isocyanurates of diisocyanates are often used, diisocyanates can also be used. Isocyanate prepolymers, for example reaction products of polyisocyanates with polyols also can be used. Mixtures of polyisocyanate crosslinking agents can be used.

The polyisocyanate can be prepared from a variety of isocyanate-containing materials. Examples of suitable polyisocyanates include trimers prepared from the following diisocyanates: toluene diisocyanate, 4,4'-methylene-bis(cyclohexyl isocyanate), isophorone diisocyanate, an isomeric mixture of 2,2,4- and 2,4,4-trimethyl hexamethylene diisocyanate, 1,6-hexamethylene diisocyanate, tetramethyl xylylene diisocyanate and 4,4'-diphenylmethylene diisocyanate. In addition, blocked polyisocyanate prepolymers of various polyols such as polyester polyols can also be used.

Isocyanate groups may be capped or uncapped as desired. If the polyisocyanate is to be blocked or capped, any suitable aliphatic, cycloaliphatic, or aromatic alkyl monoalcohol or phenolic compound known to those skilled in the art can be used as a capping agent for the polyisocyanate. Examples of suitable blocking agents include those materials which would unblock at elevated temperatures such as lower aliphatic alcohols including methanol, ethanol, and n-butanol; cycloaliphatic alcohols such as cyclohexanol; aromatic-alkyl alcohols such as phenyl carbinol and methylphenyl carbinol; and phenolic compounds such as phenol itself and substituted phenols wherein the substituents do not affect coating operations, such as cresol and nitrophenol. Glycol ethers may also be used as capping agents. Suitable glycol ethers include ethylene glycol butyl ether, diethylene glycol butyl ether, ethylene glycol methyl ether and propylene glycol methyl ether. Other suitable capping agents include oximes such as methyl ethyl ketoxime, acetone oxime and cyclohexanone oxime, lactams such as epsilon-caprolactam, pyrazoles such as dimethyl pyrazole, and amines such as dibutyl amine, butyl glycol amide, and butyl lactamide.

The crosslinking agent may optionally comprise a high molecular weight volatile group. These may be the same as discussed above. High molecular weight volatile groups may comprise 5% to 50% by weight of the film-forming binder, such as 7% to 45% by weight, such as 9% to 40% by weight, such as 11% to 35%, such as 13% to 30%, based on the total weight of the organic film-forming binder. The high molecular weight volatile groups and other lower molecular weight volatile organic compounds produced during cure, such as lower molecular weight blocking agents and organic byproducts produced during cure, may be present in an amount such that the relative weight loss of the organic film-forming binder deposited onto the substrate relative to the weight of the organic film-forming binder after cure is an amount of 5% to 50% by weight of the organic film-forming binder, such as 7% to 45% by weight, such as 9% to 40% by weight, such as 11% to 35%, such as 13% to 30%, based on the total weight of the organic film-forming binder before and after cure.

Polyepoxides are suitable curing agents for polymers having carboxylic acid groups and/or amine groups. Examples of suitable polyepoxides include low molecular weight polyepoxides such as 3,4-epoxycyclohexylmethyl 3,4-epoxycyclohexanecarboxylate and bis(3,4-epoxy-6-methylcyclohexyl-methyl) adipate. Higher molecular weight polyepoxides, including the polyglycidyl ethers of polyhydric phenols and alcohols described above, are also suitable as crosslinking agents.

Beta-hydroxyalkylamides are suitable curing agents for polymers having carboxylic acid groups. The beta-hydroxyalkylamides can be depicted structurally as follows: 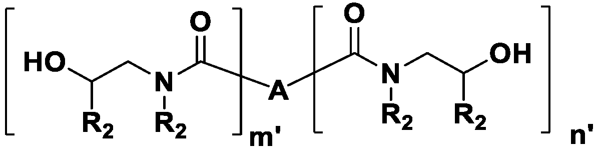 wherein each R₂ is hydrogen or lower alkyl containing from 1 to 5 carbon atoms including mixed substituents or: 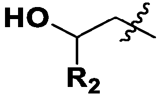 wherein R₂ is hydrogen or lower alkyl containing from 1 to 5 carbon atoms including mixed substituents; A is a bond or a polyvalent organic radical derived from a saturated, unsaturated, or aromatic hydrocarbon including substituted hydrocarbon radicals containing from 2 to 20 carbon atoms; m' is equal to 1 or 2; n' is equal to 0 or 2, and m'+n' is at least 2, usually within the range of from 2 up to and including 4. Most often, A is a C₂ to C₁₂ divalent alkylene radical.

Polyacids, particularly polycarboxylic acids, are suitable curing agents for polymers having epoxy functional groups. Examples of suitable polycarboxylic acids include adipic, succinic, sebacic, azelaic, and dodecanedioic acid. Other suitable polyacid crosslinking agents include acid group-containing acrylic polymers prepared from an ethylenically unsaturated monomer containing at least one carboxylic acid group and at least one ethylenically unsaturated monomer that is free from carboxylic acid groups. Such acid functional acrylic polymers can have an acid equivalent weight ranging from 100 to 2,000 g/mol, based on the total solid weight of the acid functional acrylic polymers. Acid functional group-containing polyesters can be used as well. Low molecular weight polyesters and half-acid esters can be used that are based on the condensation of aliphatic polyols with aliphatic and/or aromatic polycarboxylic acids or anhydrides. Examples of suitable aliphatic polyols include ethylene glycol, propylene glycol, butylene glycol, 1,6-hexanediol, trimethylol propane, di-trimethylol propane, neopentyl glycol, 1,4-cyclohexanedimethanol, pentaerythritol, and the like. The polycarboxylic acids and anhydrides may include, inter alia, terephthalic acid, isophthalic acid, phthalic acid, phthalic anhydride, tetrahydrophthalic acid, tetrahydrophthalic anhydride, hexahydrophthalic anhydride, methylhexahydrophthalic anhydride, chlorendic anhydride, and the like. Mixtures of acids and/or anhydrides may also be used. The above-described polyacid crosslinking agents are described in further detail in U.S. Patent No. 4,681,811, at column 6, line 45 to column 9, line 54, the cited portion of which is incorporated herein by reference.

Nonlimiting examples of suitable polyamine crosslinking agents include primary or secondary diamines or polyamines in which the radicals attached to the nitrogen atoms can be saturated or unsaturated, aliphatic, alicyclic, aromatic, aromatic-substituted-aliphatic, aliphatic-substituted-aromatic, and heterocyclic. Nonlimiting examples of suitable aliphatic and alicyclic diamines include 1,2-ethylene diamine, 1,2-propylene diamine, 1,8-octane diamine, isophorone diamine, propane-2,2-cyclohexyl amine, and the like. Nonlimiting examples of suitable aromatic diamines include phenylene diamines and toluene diamines, for example o-phenylene diamine and p-tolylene diamine. Polynuclear aromatic diamines such as 4,4'-biphenyl diamine, methylene dianiline and monochloromethylene dianiline are also suitable.

Examples of suitable aliphatic diamines include, without limitation, ethylene diamine, 1,2-diaminopropane, 1,4-diaminobutane, 1,3-diaminopentane, 1,6-diaminohexane, 2-methyl-1,5-pentane diamine, 2,5-diamino-2,5-dimethylhexane, 2,2,4- and/or 2,4,4-trimethyl-1,6-diamino-hexane, 1,11-diaminoundecane, 1,12-diaminododecane, 1,3- and/or 1,4-cyclohexane diamine, 1-amino-3,3,5-trimethyl-5-aminomethyl-cyclohexane, 2,4- and/or 2,6-hexahydrotoluylene diamine, 2,4'- and/or 4,4'-diamino-dicyclohexyl methane and 3,3'-dialkyl4,4'-diamino-dicyclohexyl methanes (such as 3,3'-dimethyl-4,4'-diamino-dicyclohexyl methane and 3,3'-diethyl-4,4'-diamino-dicyclohexyl methane), 2,4- and/or 2,6-diaminotoluene and 2,4'- and/or 4,4'-diaminodiphenyl methane, or mixtures thereof. Cycloaliphatic diamines are available commercially from Huntsman Corporation (Houston, TX) under the designation of JEFFLINK such as JEFFLINK 754. Additional aliphatic cyclic polyamines may also be used, such as DESMOPHEN NH 1520 available from Covestro and/or CLEARLINK 1000, which is a secondary aliphatic diamine available from Dorf Ketal. POLYCLEAR 136 (available from BASF/Hansen Group LLC), the reaction product of isophorone diamine and acrylonitrile, is also suitable. Other exemplary suitable polyamines are described in U.S. Patent No. 4,046,729 at column 6, line 61 to column 7, line 26, and in U.S. Patent No. 3,799,854 at column 3, lines 13 to 50, the cited portions of which are incorporated by reference herein. Additional polyamines may also be used, such as ANCAMINE polyamines, available from Evonik.

Suitable polyamides include any of those known in the art. For example, ANCAMIDE polyamides, available from Evonik.

Suitable polyenes may include those that are represented by the formula:

A - (X)ₘ

wherein A is an organic moiety, X is an olefinically unsaturated moiety and m is at least 2, typically 2 to 6. Examples of X are groups of the following structure: 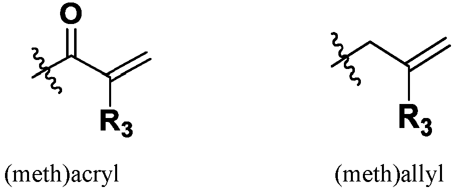 wherein each R₃ is a radical selected from H and methyl.

The polyenes may be compounds or polymers having in the molecule olefinic double bonds that are polymerizable by exposure to radiation. Examples of such materials are (meth)acrylic-functional (meth)acrylic copolymers, epoxy resin (meth)acrylates, polyester (meth)acrylates, polyether (meth)acrylates, polyurethane (meth)acrylates, amino (meth)acrylates, silicone (meth)acrylates, and melamine (meth)acrylates. The number average molar mass (Mn) of these compounds is often 200 to 10,000 as determined by GPC using polystyrene as a standard. The molecule often contains on average 2 to 20 olefinic double bonds that are polymerizable by exposure to radiation. Aliphatic and/or cycloaliphatic (meth)acrylates in each case are often used. (Cyclo)aliphatic polyurethane (meth)acrylates and (cyclo)aliphatic polyester (meth)acrylates are particularly suitable. The binders may be used singly or in mixture.

Specific examples of polyurethane (meth)acrylates are reaction products of the polyisocyanates such as 1,6-hexamethylene diisocyanate and/or isophorone diisocyanate including isocyanurate and biuret derivatives thereof with hydroxyalkyl (meth)acrylates such as hydroxyethyl (meth)acrylate and/or hydroxypropyl (meth)acrylate. The polyisocyanate can be reacted with the hydroxyalkyl (meth)acrylate in a 1:1 equivalent ratio or can be reacted with an NCO/OH equivalent ratio greater than 1 to form an NCO-containing reaction product that can then be chain extended with a polyol such as a diol or triol, for example, 1,4-butane diol, 1,6-hexane diol and/or trimethylol propane. Examples of polyester (meth)acrylates are the reaction products of (meth)acrylic acid or anhydride with polyols, such as diols, triols and tetrols, including alkylated polyols, such as propoxylated diols and triols. Examples of polyols include 1,4-butane diol, 1,6-hexane diol, neopentyl glycol, trimethylol propane, pentaerythritol and propoxylated 1,6-hexane diol. Specific examples of polyester (meth)acrylate are glycerol tri(meth)acrylate, trimethylolpropane tri(meth)acrylate, pentaerythritol tri(meth)acrylate and pentaerythritol tetra(meth)acrylate.

Besides (meth)acrylates, (meth)allyl compounds or polymers can be used either alone or in combination with (meth)acrylates. Examples of (meth)allyl materials are polyallyl ethers such as the diallyl ether of 1,4-butane diol and the triallyl ether of trimethylol propane. Examples of other (meth)allyl materials are polyurethanes containing (meth)allyl groups. For example, reaction products of the polyisocyanates such as 1,6-hexamethylene diisocyanate and/or isophorone diisocyanate including isocyanurate and biuret derivatives thereof with hydroxyl-functional allyl ethers, such as the monoallyl ether of 1,4-butane diol and the diallylether of trimethylol propane. The polyisocyanate can be reacted with the hydroxyl-functional allyl ether in a 1:1 equivalent ratio or can be reacted with an NCO/OH equivalent ratio greater than 1 to form an NCO-containing reaction product that can then be chain extended with a polyol such as a diol or triol, for example, 1,4-butane diol, 1,6-hexane diol and/or trimethylol propane.

As used herein the term "polythiol functional material" refers to polyfunctional materials containing two or more thiol functional groups (SH). Suitable polythiol functional materials for use in forming the curable film-forming composition are numerous and can vary widely. Such polythiol functional materials can include those that are known in the art. Non-limiting examples of suitable polythiol functional materials can include polythiols having at least two thiol groups including compounds and polymers. The polythiol can have ether linkages (-O-), sulfide linkages (-S-), including polysulfide linkages (-Sₓ-), wherein x is at least 2, such as from 2 to 4, and combinations of such linkages.

The polythiols for use in the present disclosure include materials of the formula:

**R₄- (SH)_{n'}**

wherein R₄ is a polyvalent organic moiety and n' is an integer of at least 2, typically 2 to 6.

Non-limiting examples of suitable polythiols include esters of thiol-containing acids of the formula HS- R₅-COOH wherein R₅ is an organic moiety with polyhydroxy compounds of the structure R₆-(OH)ₙ wherein R₆ is an organic moiety and n' is at least 2, typically 2 to 6. These components can be reacted under suitable conditions to give polythiols having the general structure: 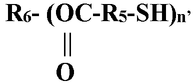 wherein R₅, R₆ and n' are as defined above.

Examples of thiol-containing acids are thioglycolic acid (HS-CH₂COOH), α-mercaptopropionic acid (HS-CH(CH₃)-COOH) and β-mercaptopropionic acid (HS-CH₂CH₂COOH) with polyhydroxy compounds such as glycols, triols, tetrols, pentaols, hexaols, and mixtures thereof. Other non-limiting examples of suitable polythiols include ethylene glycol bis (thioglycolate), ethylene glycol bis(β-mercaptopropionate), trimethylolpropane tris (thioglycolate), trimethylolpropane tris (β-mercaptopropionate), pentaerythritol tetrakis (thioglycolate) and pentaerythritol tetrakis (β-mercaptopropionate), and mixtures thereof.

Suitable polyacids and polyols useful as curing agents include any of those known in the art, such as those described herein for the making of polyesters.

Appropriate mixtures of crosslinking agents may also be used in the disclosure.

The amount of curing agent (b) in the curable film-forming composition generally ranges from 5 to 75% by weight, based on the total weight of solids in the curable film-forming composition. For example, the minimum amount of crosslinking agent may be at least 5% by weight, often at least 10% by weight and more often, at least 15% by weight, based on the total weight of solids in the curable film-forming composition. The maximum amount of crosslinking agent may be 75% by weight, more often 60% by weight, or 50% by weight, based on the total weight of solids in the curable film-forming composition. Ranges of crosslinking agent may include, for example, 5 to 50% by weight, 5 to 60% by weight, 10 to 50% by weight, 10 to 60% by weight, 10 to 75% by weight, 15 to 50% by weight, 15 to 60% by weight, and 15 to 75% by weight, based on the total weight of solids in the curable film-forming composition.

The resin component (a) may comprise epoxide functional groups and the curing agent component (b) may comprise amine functional groups. For example, the coating composition may comprise, consist essentially of, or consist of a film-forming binder comprising a resin component comprising epoxide functional groups, curing agent comprising amine functional groups, an organic solvent, and at least one of the corrosion inhibitors discussed above.

The non-electrodepositable coating composition further comprises a corrosion inhibitor comprising a azole.

A "corrosion inhibitor" will be understood as referring to a compound that inhibits corrosion of metal. The effectiveness of the corrosion inhibitor in a cured coating in preventing corrosion of the substrate onto which the coating composition is applied and cured may be demonstrated by salt spray corrosion testing according to ASTM B117. Whether the corrosion inhibitor improves corrosion resistance may be determined by testing the ability of the cured coating comprising the corrosion inhibitor to improve the corrosion performance as measured by one or more methods, such as through reduced scribe corrosion, scribe shine, and/or reduction in the number and/or size of blisters present in the coating adjacent to the scribe, when compared to a similar composition that does not include the corrosion inhibitor.

Examples of suitable azoles include benzotriazoles such as 5-methyl benzotriazole, tolyltriazole, 2,5-dimercapto-1,3,4-thiadiazole, 2-mercaptobenzothiazole, 2-mercaptobenzimidazole, 1-phenyl-5-mercaptotetrazole, 2-amino-5-mercapto-1,3,4-thiadiazole, 2-mercapto-1-methylimidazole, 2-amino-5-ethyl-1,3,4-thiadiazole, 2-amino-5-ethylthio-1,3,4-thiadiazole, 5-phenyltetrazole, 7h-imidazo(4,5-d)pyrimidine, and 2-amino thiazole. Salts of any of the foregoing, such as sodium and/or zinc salts, are also suitable. Additional azoles include 2-hydroxybenzothiazole, benzothiazole, 1-phenyl-4-methylimidazole, and 1-(p-tolyl)-4-methlyimidazole. A suitable azole-containing product is commercially available from WPC Technologies, as HYBRICOR 204, HYBRICOR 204S, and INHIBICOR 1000. Mixtures of azoles may also be used.

The corrosion inhibitor may be present in an amount of at least 1% by weight, such as at least 3% by weight, such as at least 5% by weight, such as at least 7% by weight, such as at least 9% by weight, such as at least 10% by weight, and may be present in an amount of no more than 50% by weight, such as no more than 40% by weight, such as no more than 35% by weight, such as no more than 30% by weight, such as no more than 25% by weight, such as no more than 20% by weight, based on the total resin solids weight of the coating composition. The corrosion inhibitor may be present in an amount of 1% to 50% by weight, such as 3% to 40% by weight, such as 5% to 35% by weight, such as 7% to 30% by weight, such as 9% to 25% by weight, such as 10% to 20% by weight, based on the total resin solids weight of the coating composition.

The curable film-forming composition of the present disclosure, comprising (1) a curable, organic film-forming binder component (i.e., (a) a resin component and (b) a curing agent component) and (2) a corrosion inhibitor, may be provided and stored as one-package compositions prior to use. A one-package composition will be understood as referring to a composition wherein all the coating components are maintained in the same container after manufacture, during storage, etc. A typical one-package coating can be applied to a substrate and cured by any conventional means, such as by heating, forced air, radiation cure and the like. For some coatings, such as ambient cure coatings, it is not practical to store them as a one-package, but rather they must be stored as multi-package coatings to prevent the components from curing prior to use. The term "multi-package coatings" means coatings in which various components are maintained separately until just prior to application. The present coatings can also be multi-package coatings, such as a two-package coating.

Thus, the components (a) and (b) may be provided as a one-package (1K) or multi-package, such as a two-package (2K) system. The components of the organic film-forming binder (1) are often provided in separate packages and mixed together immediately prior to the reaction. When the reaction mixture is a multi-package system, the corrosion inhibitor (2) may be present in either one or both of the separate components (a) and (b) and/or as an additional separate component package.

The curable film-forming composition of the present disclosure may additionally include optional ingredients commonly used in such compositions. For example, the composition may further comprise a hindered amine light stabilizer for UV degradation resistance. Such hindered amine light stabilizers include those disclosed in U. S. Patent No. 5,260,135. When they are used, they are typically present in the composition in an amount of 0.1 to 2 percent by weight, based on the total weight of resin solids in the film-forming composition. Other optional additives may be included such as colorants, plasticizers, abrasion-resistant particles, film strengthening particles, flow control agents, thixotropic agents, rheology modifiers, fillers, catalysts, antioxidants, biocides, defoamers, surfactants, wetting agents, dispersing aids, adhesion promoters, UV light absorbers and stabilizers, a stabilizing agent, organic cosolvents, reactive diluents, grind vehicles, and other customary auxiliaries, or combinations thereof. The term "colorant", as used herein is as defined in U.S. Patent Publication No. 2012/0149820, paragraphs 29 to 38, the cited portion of which is incorporated herein by reference.

An "abrasion-resistant particle" is one that, when used in a coating, will impart some level of abrasion resistance to the coating as compared with the same coating lacking the particles. Suitable abrasion-resistant particles include organic and/or inorganic particles. Examples of suitable organic particles include, but are not limited to, diamond particles, such as diamond dust particles, and particles formed from carbide materials; examples of carbide particles include, but are not limited to, titanium carbide, silicon carbide and boron carbide. Examples of suitable inorganic particles, include but are not limited to silica; alumina; alumina silicate; silica alumina; alkali aluminosilicate; borosilicate glass; nitrides including boron nitride and silicon nitride; oxides including titanium dioxide and zinc oxide; quartz; nepheline syenite; zircon such as in the form of zirconium oxide; buddeluyite; and eudialyte. Particles of any size can be used, as can mixtures of different particles and/or different sized particles.

As used herein, the terms "adhesion promoter" and "adhesion promoting component" refer to any material that, when included in the composition, enhances the adhesion of the coating composition to a metal substrate. Such an adhesion promoting component often comprises a free acid. As used herein, the term "free acid" is meant to encompass organic and/or inorganic acids that are included as a separate component of the compositions as opposed to any acids that may be used to form a polymer that may be present in the composition. The free acid may comprise tannic acid, gallic acid, phosphoric acid, phosphorous acid, citric acid, malonic acid, a derivative thereof, or a mixture thereof. Suitable derivatives include esters, amides, and/or metal complexes of such acids. Often, the free acid comprises a phosphoric acid, such as a 100 percent orthophosphoric acid, superphosphoric acid or the aqueous solutions thereof, such as a 70 to 90 percent phosphoric acid solution.

In addition to or in lieu of such free acids, other suitable adhesion promoting components are metal phosphates, organophosphates, and organophosphonates. Suitable organophosphates and organophosphonates include those disclosed in U.S. Patent No. 6,440,580 at column 3, line 24 to column 6, line 22, U.S. Patent No. 5,294,265 at column 1, line 53 to column 2, line 55, and U.S. Patent No. 5,306,526 at column 2, line 15 to column 3, line 8, the cited portions of which are incorporated herein by reference. Suitable metal phosphates include, for example, zinc phosphate, iron phosphate, manganese phosphate, calcium phosphate, magnesium phosphate, cobalt phosphate, zinc-iron phosphate, zinc-manganese phosphate, zinc-calcium phosphate, including the materials described in U.S. Patent Nos. 4,941,930, 5,238,506, and 5,653,790. As noted above, in certain situations, phosphates are excluded.

The adhesion promoting component may comprise a phosphatized epoxy resin. Such resins may comprise the reaction product of one or more epoxy-functional materials and one or more phosphorus-containing materials. Non-limiting examples of such materials, which are suitable for use in the present disclosure, are disclosed in U.S. Patent No. 6,159,549 at column 3, lines 19 to 62, the cited portion of which is incorporated by reference herein.

The curable film-forming composition of the present disclosure may also comprise alkoxysilane adhesion promoting agents, for example, acryloxyalkoxysilanes, such as γ-acryloxypropyltrimethoxysilane and methacrylatoalkoxysilane, such as γ-methacryloxypropyltrimethoxysilane, as well as epoxy-functional silanes, such as γ-glycidoxypropyltrimethoxysilane. Exemplary suitable alkoxysilanes are described in U.S. Patent No. 6,774,168 at column 2, lines 23 to 65, the cited portion of which is incorporated by reference herein.

The adhesion promoting component, if used, is usually present in the coating composition in an amount ranging from 0.05 to 20 percent by weight, such as at least 0.05 percent by weight or at least 0.25 percent by weight, and at most 20 percent by weight or at most 15 percent by weight, with ranges such as 0.05 to 15 percent by weight, 0.25 to 15 percent by weight, or 0.25 to 20 percent by weight, with the percentages by weight being based on the total weight of resin solids in the composition.

The curable film-forming compositions of the present disclosure may comprise one or more solvents including water and/or organic solvents. Suitable organic solvents include glycols, glycol ether alcohols, alcohols, ketones, and aromatics, such as xylene and toluene, acetates, mineral spirits, naphthas and/or mixtures thereof. "Acetates" include the glycol ether acetates. The solvent can be a non-aqueous solvent. "Non-aqueous solvent" and like terms means that less than 50 wt% of the solvent is water. For example, less than 10 wt%, or even less than 5 wt% or 2 wt%, of the solvent can be water. It will be understood that mixtures of solvents, including water in an amount of less than 50 wt% or containing no water, can constitute a "non-aqueous solvent". The composition may be aqueous or water-based. This means that more than 50 wt% of the solvent is water. Such compositions have less than 50 wt%, such as less than 20 wt%, less than 10 wt%, less than 5 wt% or less than 2 wt% of organic solvent(s).

### Substrates

According to the present disclosure, the coating system of the present disclosure may be applied to a substrate. Suitable substrates include metal substrates, metal alloy substrates, and/or substrates that have been metallized, such as nickel-plated plastic. Additionally, substrates may comprise non-metal conductive materials including composite materials such as, for example, materials comprising carbon fibers or conductive carbon. According to the present disclosure, the metal or metal alloy may comprise, for example, cold rolled steel, hot rolled steel, steel coated with zinc metal, zinc compounds, or zinc alloys, such as electrogalvanized steel, hot-dipped galvanized steel, galvanealed steel, GALVANNEAL steel, nickel-plated steel, and steel plated with zinc alloy. Steel substrates (such as cold rolled steel or any of the steel substrates listed above) coated with a weldable, zinc-rich or iron phosphide-rich organic coating are also suitable for use in the present disclosure. Such weldable coating compositions are disclosed in U. S. Patent Nos. 4,157,924 and 4,186,036. The substrate may comprise aluminum, aluminum alloys, zinc-aluminum alloys such as GALFAN, GALVALUME, aluminum plated steel, and aluminum alloy plated steel substrates. Non-limiting examples of aluminum alloys include the 1XXX, 2XXX, 3XXX, 4XXX, 5XXX, 6XXX, or 7XXX series, such as 2024, 7075, 6061 as particular examples, as well as clad aluminum alloys and cast aluminum alloys, such as, for example, the A356 series. The substrate may comprise a magnesium alloy. Non-limiting examples of magnesium alloys of the AZ31B, AZ91C, AM60B, or EV31A series also may be used as the substrate. The substrate used in the present disclosure may also comprise other suitable non-ferrous metals such as titanium or copper, as well as alloys of these materials. The substrate may also comprise more than one metal or metal alloy in that the substrate may be a combination of two or more metal substrates assembled together such as hot-dipped galvanized steel assembled with aluminum substrates.

Suitable metal substrates for use in the present disclosure include those that are often used in the assembly of vehicular bodies (e.g., without limitation, door, body panel, trunk deck lid, roof panel, hood, roof and/or stringers, rivets, landing gear components, and/or skins used on an aircraft), a vehicular frame, vehicular parts, motorcycles, wheels, industrial structures and components such as appliances, including washers, dryers, refrigerators, stoves, dishwashers, and the like, agricultural equipment, lawn and garden equipment, air conditioning units, heat pump units, lawn furniture, and other articles. The substrate may comprise a vehicle or a portion or part thereof. The term "vehicle" is used in its broadest sense and includes all types of aircraft, spacecraft, watercraft, and ground vehicles. For example, a vehicle can include, aircraft such as airplanes including private aircraft, and small, medium, or large commercial passenger, freight, and military aircraft; helicopters, including private, commercial, and military helicopters; drones, aerospace vehicles including, rockets and other spacecraft. A vehicle can include a ground vehicle such as, for example, trailers, cars, trucks, buses, vans, construction vehicles, golf carts, motorcycles, bicycles, trains, and railroad cars. A vehicle can also include watercraft such as, for example, ships, boats, and hovercraft. The aqueous resinous dispersion may be utilized to coat surfaces and parts thereof. A part may include multiple surfaces. A part may include a portion of a larger part, assembly, or apparatus. A portion of a part may be coated with the aqueous resinous dispersion of the present disclosure or the entire part may be coated.

The metal substrate may be in the shape of a cylinder, such as a pipe, including, for example, a cast iron pipe. The metal substrate also may be in the form of, for example, a sheet of metal or a fabricated part. The substrate may also comprise conductive or non-conductive substrates at least partially coated with a conductive coating. The conductive coating may comprise a conductive agent such as, for example, graphene, conductive carbon black, conductive polymers, or conductive additives. It will also be understood that the substrate may be pretreated with a pretreatment solution. Non-limiting examples of a pretreatment solution include a zinc phosphate pretreatment solution such as, for example, those described in U.S. Patent Nos. 4,793,867 and 5,588,989, a zirconium containing pretreatment solution such as, for example, those described in U.S. Patent Nos. 7,749,368 and 8,673,091. Other non-limiting examples of a pretreatment solution include those comprising trivalent chromium, hexavalent chromium, lithium salts, permanganate, rare earth metals, such as yttrium, or lanthanides, such as cerium. Another non-limiting example of a suitable surface pretreatment solution is a solgel, such as those comprising alkoxy-silanes, alkoxy-zirconates, and/or alkoxy-titanates. Alternatively, the substrate may be a non-pretreated substrate, such as a bare substrate, that is not pretreated by a pretreatment solution.

The substrate may optionally be subjected to other treatments prior to coating. For example, the substrate may be cleaned, cleaned and deoxidized, anodized, acid pickled, plasma treated, laser treated, or ion vapor deposition (IVD) treated. These optional treatments may be used on their own or in combination with a pretreatment solution. The substrate may be new (i.e., newly constructed or fabricated) or it may be refurbished, such as, for example, in the case of refinishing or repairing a component of an automobile or aircraft.

### Methods of Coating and Multi-Layered Coated Metal Substrates

The present disclosure is also directed to a method of coating a metal substrate, the method comprising electrodepositing the electrodepositable coating composition described above to at least a portion of the substrate to form an electrodeposited coating layer; and applying the non-electrodepositable coating composition described above to at least a portion of the electrodeposited coating layer to form a second coating layer.

According the present disclosure such method comprises electrophoretically applying an electrodepositable coating composition as described above to at least a portion of the substrate.

According to the present disclosure, the anionic electrodepositable coating composition of the present disclosure may be deposited upon an electrically conductive substrate by placing the composition in contact with an electrically conductive cathode and an electrically conductive anode, with the surface to be coated being the anode. Following contact with the composition, an adherent film of the coating composition is deposited on the anode when a sufficient voltage is impressed between the electrodes. The conditions under which the electrodeposition is carried out are, in general, similar to those used in electrodeposition of other types of coatings. The applied voltage may be varied and can be, for example, as low as one volt to as high as several thousand volts, such as between 50 and 500 volts. The current density may be between 0.5 ampere and 15 amperes per square foot and tends to decrease during electrodeposition indicating the formation of an insulating film.

Once the anionic electrodepositable coating composition is electrodeposited over at least a portion of the electroconductive substrate, the coated substrate may be heated to a temperature and for a time sufficient to at least partially cure the electrodeposited coating on the substrate. As used herein, the term "at least partially cured" with respect to a coating refers to a coating formed by subjecting the coating composition to curing conditions such that a chemical reaction of at least a portion of the reactive groups of the components of the coating composition occurs to form a coating. The coated substrate may be heated to a temperature ranging from 200°F to 450°F (93°C to 232.2°C), such as from 275°F to 400°F (135°C to 204.4°C), such as from 300°F to 360°F (149°C to 180°C). The curing time may be dependent upon the curing temperature as well as other variables, for example, film thickness of the electrodeposited coating, level and type of catalyst present in the composition and the like. For purposes of the present disclosure, all that is necessary is that the time be sufficient to effect cure of the coating on the substrate. For example, the curing time may range from 10 to 60 minutes, such as 20 to 40 minutes. The thickness of the resultant cured electrodeposited coating may range from 15 to 50 microns.

According to the present disclosure, the method may comprise (a) electrophoretically depositing onto at least a portion of the substrate an electrodepositable coating composition of the present disclosure and (b) heating the coated substrate to a temperature and for a time sufficient to cure the electrodeposited coating layer on the substrate. According to the present disclosure, the method may optionally further comprise (c) applying directly to the at least partially cured electrodeposited coating one or more non-electrodepositable coating compositions as described above to form a second coating layer over at least a portion of the at least partially cured electrodeposited coating, and (d) heating and/or drying the coated substrate of step (c) to a temperature and for a time sufficient to cure the second coating layer.

The non-electrodepositable coating compositions of the present disclosure may be applied to a substrate by known application techniques, such as dipping or immersion, spraying, intermittent spraying, dipping followed by spraying, spraying followed by dipping, brushing, or by roll-coating. Usual spray techniques and equipment for air spraying and electrostatic spraying, either manual or automatic methods, can be used.

After application of the non-electrodepositable coating composition to to at least a portion of the electrodeposited coating layer to form a second coating layer, solvent, i.e., organic solvent and/or water, is driven out of the second coating layer by heating or by an air-drying period. Suitable drying conditions will depend on the particular composition and/or application, but in some instances a drying time of from about 1 to 5 minutes at a temperature of about 70 to 250°F (27 to 121°C) will be sufficient. More than one coating layer of the non-electrodepositable coating composition may be applied if desired. Usually between coats, the previously applied coat is flashed; that is, exposed to ambient conditions for the desired amount of time. The thickness of the second coating layer may be from 0.1 to 3 mils (2.5 to 75 microns), such as 0.2 to 2.0 mils (5.0 to 50 microns). The non-electrodepositable coating composition may then be heated. In the curing operation, solvents are driven off and crosslinkable components of the composition are crosslinked. The heating and curing operation is sometimes carried out at a temperature in the range of from 70 to 250°F (27 to 121°C) but, if needed, lower or higher temperatures may be used. As noted previously, the coatings of the present disclosure may also cure without the addition of heat or a drying step. Additionally, a coating layer may be applied and then a second applied thereto "wet-on-wet". Alternatively, the coating layer can be cured before application of one or more additional coating layers.

The system and method of the present disclosure may be utilized to form a multi-layer coating composite comprising a substrate with various coating layers. The coating layers may include a pretreatment layer, such as a phosphate layer (e.g., zinc phosphate layer), an electrodeposited layer, and the second coating layer comprising a corrosion inhibitor comprising an azole. The second coating layer may be a primer or a top coat layer(s) (e.g., base coat, clear coat layer, pigmented monocoat, and color-plus-clear composite compositions), and the substrate may optionally comprise additional top coat layer on the second coating layer. It is understood that suitable topcoat layers in addition to the second coating layer include any of those known in the art, and each independently may be waterborne, solventborne, in solid particulate form (i.e., a powder coating composition), or in the form of a powder slurry. The top coat typically includes a film-forming polymer, crosslinking material and, if a colored base coat or monocoat, one or more pigments. According to the present disclosure, one or more of the topcoat layers may be applied onto a substantially uncured underlying layer. For example, a clear coat layer may be applied onto at least a portion of a substantially uncured basecoat layer (wet-on-wet), and both layers may be simultaneously cured in a downstream process.

According to the present disclosure, additional ingredients such as colorants and fillers may be present in the various coating compositions from which the top coat layers result. Any suitable colorants and fillers may be used. For example, the colorant may be added to the coating in any suitable form, such as discrete particles, dispersions, solutions and/or flakes. A single colorant or a mixture of two or more colorants can be used in the coatings of the present disclosure. It should be noted that, in general, the colorant can be present in a layer of the multi-layer composite in any amount sufficient to impart the desired property, visual and/or color effect.

Example colorants include pigments, dyes and tints, such as those used in the paint industry and/or listed in the Dry Color Manufacturers Association (DCMA), as well as special effect compositions. A colorant may include, for example, a finely divided solid powder that is insoluble but wettable under the conditions of use. A colorant may be organic or inorganic and may be agglomerated or non-agglomerated. Colorants may be incorporated into the coatings by grinding or simple mixing. Colorants may be incorporated by grinding into the coating by use of a grind vehicle, such as an acrylic grind vehicle, the use of which will be familiar to one skilled in the art.

Example pigments and/or pigment compositions include, but are not limited to, carbazole dioxazine crude pigment, azo, monoazo, disazo, naphthol AS, salt type (lakes), benzimidazolone, condensation, metal complex, isoindolinone, isoindoline and polycyclic phthalocyanine, quinacridone, perylene, perinone, diketopyrrolo pyrrole, thioindigo, anthraquinone, indanthrone, anthrapyrimidine, flavanthrone, pyranthrone, anthanthrone, dioxazine, triarylcarbonium, quinophthalone pigments, diketo pyrrolo pyrrole red ("DPP red BO"), titanium dioxide, carbon black, zinc oxide, antimony oxide, etc. and organic or inorganic UV opacifying pigments such as iron oxide, transparent red or yellow iron oxide, phthalocyanine blue and mixtures thereof. The terms "pigment" and "colored filler" can be used interchangeably.

Example dyes include, but are not limited to, those that are solvent and/or aqueous based such as acid dyes, azoic dyes, basic dyes, direct dyes, disperse dyes, reactive dyes, solvent dyes, sulfur dyes, mordant dyes, for example, bismuth vanadate, anthraquinone, perylene, aluminum, quinacridone, thiazole, thiazine, azo, indigoid, nitro, nitroso, oxazine, phthalocyanine, quinoline, stilbene, and triphenyl methane.

Example tints include, but are not limited to, pigments dispersed in water-based or water miscible carriers such as AQUA-CHEM 896 commercially available from Degussa, Inc., CHARISMA COLORANTS and MAXITONER INDUSTRIAL COLORANTS commercially available from Accurate Dispersions division of Eastman Chemical, Inc.

The colorant may be in the form of a dispersion including, but not limited to, a nanoparticle dispersion. Nanoparticle dispersions can include one or more highly dispersed nanoparticle colorants and/or colorant particles that produce a desired visible color and/or opacity and/or visual effect. Nanoparticle dispersions may include colorants such as pigments or dyes having a particle size of less than 150 nm, such as less than 70 nm, or less than 30 nm. Nanoparticles may be produced by milling stock organic or inorganic pigments with grinding media having a particle size of less than 0.5 mm. Example nanoparticle dispersions and methods for making them are identified in U.S. Patent No. 6,875,800 B2, which is incorporated herein by reference. Nanoparticle dispersions may also be produced by crystallization, precipitation, gas phase condensation, and chemical attrition (i.e., partial dissolution). In order to minimize reagglomeration of nanoparticles within the coating, a dispersion of resin-coated nanoparticles may be used. As used herein, a "dispersion of resin-coated nanoparticles" refers to a continuous phase in which is dispersed discreet "composite microparticles" that comprise a nanoparticle and a resin coating on the nanoparticle. Example dispersions of resin-coated nanoparticles and methods for making them are identified in U.S. Application No. 10/876,031 filed June 24, 2004, which is incorporated herein by reference, and U.S. Provisional Application No. 60/482,167 filed June 24, 2003, which is also incorporated herein by reference.

According to the present disclosure, special effect compositions that may be used in one or more layers of the multi-layer coating composite include pigments and/or compositions that produce one or more appearance effects such as reflectance, pearlescence, metallic sheen, phosphorescence, fluorescence, photochromism, photosensitivity, thermochromism, goniochromism and/or color-change. Additional special effect compositions may provide other perceptible properties, such as reflectivity, opacity or texture. For example, special effect compositions may produce a color shift, such that the color of the coating changes when the coating is viewed at different angles. Example color effect compositions are identified in U.S. Patent No. 6,894,086, incorporated herein by reference. Additional color effect compositions may include transparent coated mica and/or synthetic mica, coated silica, coated alumina, a transparent liquid crystal pigment, a liquid crystal coating, and/or any composition wherein interference results from a refractive index differential within the material and not because of the refractive index differential between the surface of the material and the air.

According to the present disclosure, a photosensitive composition and/or photochromic composition, which reversibly alters its color when exposed to one or more light sources, can be used in a number of layers in the multi-layer composite. Photochromic and/or photosensitive compositions can be activated by exposure to radiation of a specified wavelength. When the composition becomes excited, the molecular structure is changed and the altered structure exhibits a new color that is different from the original color of the composition. When the exposure to radiation is removed, the photochromic and/or photosensitive composition can return to a state of rest, in which the original color of the composition returns. For example, the photochromic and/or photosensitive composition may be colorless in a non-excited state and exhibit a color in an excited state. Full color-change may appear within milliseconds to several minutes, such as from 20 seconds to 60 seconds. Example photochromic and/or photosensitive compositions include photochromic dyes.

According to the present disclosure, the photosensitive composition and/or photochromic composition may be associated with and/or at least partially bound to, such as by covalent bonding, a polymer and/or polymeric materials of a polymerizable component. In contrast to some coatings in which the photosensitive composition may migrate out of the coating and crystallize into the substrate, the photosensitive composition and/or photochromic composition associated with and/or at least partially bound to a polymer and/or polymerizable component in accordance with the present disclosure, have minimal migration out of the coating. Example photosensitive compositions and/or photochromic compositions and methods for making them are identified in U.S. Application Serial No. 10/892,919 filed July 16, 2004 and incorporated herein by reference.

The electrodeposited layer and second coating layer of the present disclosure may be applied directly to the metal substrate when there is no intermediate coating between the substrate and the coating layers. By this is meant that the substrate may be bare, as described below, or may be treated with one or more cleaning, deoxidizing, and/or pretreatment compositions as described below, or the substrate may be anodized. Alternatively, the substrate may be coated with one or more different coating compositions prior to application of the coating composition of the present disclosure. The additional coating layers may comprise solgels, adhesion promoters, primers, wash primers, basecoats, or topcoats, and may be applied by any method known in the art, such as, for example, dip, roll, spray, brush, or electrodeposition.

As noted above, the substrates to be used may be bare metal substrates. By "bare" is meant a virgin metal substrate that has not been treated with any pretreatment compositions such as conventional phosphating baths, heavy metal rinses, etc. Additionally, bare metal substrates being used in the present disclosure may be a cut edge of a substrate that is otherwise treated and/or coated over the rest of its surface. Alternatively, the substrates may undergo one or more treatment steps known in the art prior to the application of the electrodeposited coating layer and the second coating layer.

The substrate may optionally be cleaned using conventional cleaning procedures and materials. These would include mild or strong alkaline cleaners such as are commercially available and conventionally used in metal pretreatment processes. Examples of alkaline cleaners include Chemkleen 163 and Chemkleen 177, both of which are available from PPG Industries, Pretreatment and Specialty Products, and any of the DFM Series, RECC 1001, and 88Xl002 cleaners commercially available from PRC-DeSoto International, Sylmar, CA), and Turco 4215-NCLT and Ridolene (commercially available from Henkel Technologies, Madison Heights, Ml). Such cleaners are often preceded or followed by a water rinse, such as with tap water, distilled water, or combinations thereof. The metal surface may also be rinsed with an aqueous acidic solution after or in place of cleaning with the alkaline cleaner. Examples of rinse solutions include mild or strong acidic cleaners such as the dilute nitric acid solutions commercially available and conventionally used in metal pretreatment processes.

According to the present disclosure, at least a portion of a cleaned aluminum substrate surface may be deoxidized, mechanically or chemically. As used herein, the term "deoxidize" means removal of the oxide layer found on the surface of the substrate in order to promote uniform deposition of the pretreatment composition (described below), as well as to promote the adhesion of the pretreatment composition coating and/or the coating layers of the present disclosure to the substrate surface. Suitable deoxidizers will be familiar to those skilled in the art. A typical mechanical deoxidizer may be uniform roughening of the substrate surface, such as by using a scouring or cleaning pad. Typical chemical deoxidizers include, for example, acid-based deoxidizers such as phosphoric acid, nitric acid, fluoroboric acid, sulfuric acid, chromic acid, hydrofluoric acid, and ammonium bifluoride, or Amchem 7/17 deoxidizers (available from Henkel Technologies, Madison Heights, MI), OAKITE DEOXIDIZER LNC (commercially available from Chemetall), TURCO DEOXIDIZER 6 (commercially available from Henkel), or combinations thereof. Often, the chemical deoxidizer comprises a carrier, often an aqueous medium, so that the deoxidizer may be in the form of a solution or dispersion in the carrier, in which case the solution or dispersion may be brought into contact with the substrate by any of a variety of known techniques, such as dipping or immersion, spraying, intermittent spraying, dipping followed by spraying, spraying followed by dipping, brushing, or roll-coating.

The metal substrate may optionally be pickled by treatment with solutions comprising nitric acid and/or sulfuric acid.

The metal substrate may optionally be pretreated with any suitable solution known in the art, such as a metal phosphate solution, an aqueous solution containing at least one Group IIIB or IVB metal, an organophosphate solution, an organophosphonate solution, and combinations thereof. The pretreatment solutions may be essentially free of environmentally detrimental heavy metals such as chromium and nickel. Suitable phosphate conversion coating compositions may be any of those known in the art that are free of heavy metals. Examples include zinc phosphate, which is used most often, iron phosphate, manganese phosphate, calcium phosphate, magnesium phosphate, cobalt phosphate, zinc-iron phosphate, zinc-manganese phosphate, zinc-calcium phosphate, and layers of other types, which may contain one or more multivalent cations. Phosphating compositions are known to those skilled in the art and are described in U. S. Patents 4,941,930, 5,238,506, and 5,653,790.

The IIIB or IVB transition metals and rare earth metals referred to herein are those elements included in such groups in the CAS Periodic Table of the Elements as is shown, for example, in the Handbook of Chemistry and Physics, 63rd Edition (1983).

Typical group IIIB and IVB transition metal compounds and rare earth metal compounds are compounds of zirconium, titanium, hafnium, yttrium and cerium and mixtures thereof. Typical zirconium compounds may be selected from hexafluorozirconic acid, alkali metal and ammonium salts thereof, ammonium zirconium carbonate, zirconyl nitrate, zirconium carboxylates and zirconium hydroxy carboxylates such as hydrofluorozirconic acid, zirconium acetate, zirconium oxalate, ammonium zirconium glycolate, ammonium zirconium lactate, ammonium zirconium citrate, and mixtures thereof. Hexafluorozirconic acid is used most often. An example of a titanium compound is fluorotitanic acid and its salts. An example of a hafnium compound is hafnium nitrate. An example of a yttrium compound is yttrium nitrate. An example of a cerium compound is cerous nitrate.

Typical compositions to be used in the pretreatment step include non-conductive organophosphate and organophosphonate pretreatment compositions such as those disclosed in U. S. Patents 5,294,265 and 5,306,526. Such organophosphate or organophosphonate pretreatments are available commercially from PPG Industries, Inc. under the name NUPAL.

In the aerospace industry, anodized surface treatments as well as chromium based conversion coatings/pretreatments are often used on aluminum alloy substrates. Examples of anodized surface treatments would be chromic acid anodizing, phosphoric acid anodizing, boric acid-sulfuric acid anodizing, tartaric acid anodizing, sulfuric acid anodizing. Chromium based conversion coatings would include hexavalent chromium types, such as BONDERITE M-CR1200 from Henkel, and trivalent chromium types, such as BONDERITE M-CR T5900 from Henkel.

The present disclosure is further directed to a multilayer coated metal substrate comprising (a) a metal substrate; (b) an electrodeposited coating layer present on at least a portion of the metal substrate, wherein the electrodeposited coating layer comprises an anionic salt group-containing film-forming polymer and a curing agent, and the anionic salt group-containing film-forming polymer does not include carbamate functional groups if the anionic salt group-containing film-forming polymer is a phosphatized epoxy resin; and (c) a second coating layer present on at least a portion of the electrodeposited coating layer, wherein the second coating layer comprises a corrosion inhibitor comprising an azole, , wherein the electrodeposited coating layer is electrodeposited from the electrodepositable coating composition described above, and the second coating layer is applied from the non-electrodepositable coating composition described above.

The metal substrate may comprise any of the metal substrate described above. For example, the metal substrate may comprise aluminum or an aluminum alloy. The alumimum alloy may comprise a 2000, 3000, 4000, 5000, 6000, or 7000, series aluminum alloy, such as, for example, a 2024 aluminum alloy, a 7075 aluminum alloy, or a 6061 aluminum alloy.

The metal substrate may be clad or not clad, and if clad, the clay layer may comprise the same or a different material as the metal substrate. For example, the metal substrate may comprise a clad aluminum alloy, and the clad layer may optionally comprise aluminum or an aluminum alloy.

The electrodeposited layer may optionally further comprise a corrosion inhibitor. Non-limiting examples of a suitable corrosion inhibitor include an azole, a calcium ion-exchanged silica, or any combination thereof.

Alternatively, the electrodeposited layer may be substantially free, essentially free, or completely free of a corrosion inhibitor.

Non-limiting examples of the azole of the second coating layer comprise, consist essentially of, or consist of 5-methyl benzotriazole, tolyltriazole, 2,5-dimercapto-1,3,4-thiadiazole, 2-mercaptobenzothiazole, 2-mercaptobenzimidazole, 1-phenyl-5-mercaptotetrazole, 2-amino-5-mercapto-1,3,4-thiadiazole, 2-mercapto-1-methylimidazole, 2-amino-5-ethyl-1,3,4-thiadiazole, 2-amino-5-ethylthio-1,3,4-thiadiazole, 5-phenyltetrazole, 7h-imidazo(4,5-d)pyrimidine, 2-amino thiazole, 2-hydroxybenzothiazole, benzothiazole, 1-phenyl-4-methylimidazole, and 1-(p-tolyl)-4-methlyimidazole, salts thereof, or any combination thereof. For example, the second coating layer may comprise a corrosion inhibitor comprising, consisting essentially of, or consisting of a zinc salt of 2,5-dimercapto-1,3,4-thiadiazole. For example, the second coating layer may comprise a corrosion inhibitor comprising, consisting essentially of, or consisting of a zinc salt of 2-mercaptobenzothiazole.

Coated metal substrates of the present disclosure may demonstrate excellent corrosion resistance as determined by salt spray corrosion resistance testing.

As used herein, unless otherwise defined, the term "substantially free" means that the component is present, if at all, in an amount of less than 1% by weight, based on the total resin solids weight of the composition.

As used herein, unless otherwise defined, the term "essentially free" means that the component is present, if at all, in an amount of less than 0.1% by weight, based on the total resin solids weight of the composition.

As used herein, unless otherwise defined, the term "completely free" means that the component is not present in the composition, i.e., 0.00% by weight, based on the total resin solids weight of the composition.

For purposes of this detailed description, it is to be understood that the disclosure may assume alternative variations and step sequences, except where expressly specified to the contrary. Moreover, other than in any operating examples, or where otherwise indicated, all numbers expressing, for example, quantities of ingredients used in the specification and claims are to be understood as being modified in all instances by the term "about". Accordingly, unless indicated to the contrary, the numerical parameters set forth in the following specification and attached claims are approximations that may vary depending upon the desired properties to be obtained by the present disclosure. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard variation found in their respective testing measurements.

Also, it should be understood that any numerical range recited herein is intended to include all sub-ranges subsumed therein. For example, a range of " 1 to 10" is intended to include all sub-ranges between (and including) the recited minimum value of 1 and the recited maximum value of 10, that is, having a minimum value equal to or greater than 1 and a maximum value of equal to or less than 10.

As used herein, "including," "containing" and like terms are understood in the context of this application to be synonymous with "comprising" and are therefore open-ended and do not exclude the presence of additional undescribed or unrecited elements, materials, ingredients or method steps. As used herein, "consisting of" is understood in the context of this application to exclude the presence of any unspecified element, ingredient or method step. As used herein, "consisting essentially of" is understood in the context of this application to include the specified elements, materials, ingredients or method steps "and those that do not materially affect the basic and novel characteristic(s)" of what is being described.

In this application, the use of the singular includes the plural and plural encompasses singular, unless specifically stated otherwise. For example, although reference is made herein to "an" anionic salt group-containing film-forming polymer, "a" curing agent, "a" monomer, a combination (i.e., a plurality) of these components may be used. In addition, in this application, the use of "or" means "and/or" unless specifically stated otherwise, even though "and/or" may be explicitly used in certain instances.

Illustrating the disclosure are the following examples, which, however, are not to be considered as limiting the disclosure to their details. Unless otherwise indicated, all parts and percentages in the following examples, as well as throughout the specification, are by weight.

### EXAMPLES

**TABLE 1: provides a description of materials used in preparation of the examples.**

| Component | Description | Supplier |
|---|---|---|
| Desmophen 651 MPAX | Polyester Resin | Covestro |
| Incozol LV | CARBONATO-BIS-OXAZOLIDINE | Incorez, Ltd |
| Disperbyk 110 | Wetting and dispersion agent | Byk |
| ½ second CAB | Cellulose Acetate Butyrate | Eastman |
| Desmorapid PP | Tertiary Amine | Covestro |
| Special Black 5 | Carbon Black | Evonik |
| Bayferrox 3920 | Iron Oxide | Lanxess Corp |
| Portaryte B4 | Barium Sulfate | Sibelco |
| Bentone 27 | Rheology additive | Elementis Specialties |
| Minex 7 | Nepheline syenite | Covia |
| Lancomatt 1100 | Amorphous Silica | Lubrizol |
| R706 TiO2 | Titanium Dioxide | The Chemours Company LLC |
| Inhibicor 1000 | Corrosion Inhibitor | WPC Technologies |
| ACRS2200 | Aerocron^{™} 2200 Resin System | PPG Industries |
| ACPP 1120 | Aerocron^{™} 1100 Gray Paste | PPG Industries |
| ACPP 2240 | Aerocron^{™} 2200 Anticorrosion Paste | PPG Industries |
| Desmodur N75 MPA/X | Polyfunctional Aliphatic Isocyanate | Covestro |
| Milling Media | 0.89 - 1.17 mm Alumina | Coorstek |
| Turco 4215 NC-LT | Alkaline Cleaner | Henkel |
| Nitric Acid, (68 to 70%) | Acidic Pickling Component | Fisher Scientific |
| Sulfuric Acid (93 to 98%) | Acidic Pickling Component | Fisher Scientific |
| Iron (III) Sulphate Pentahydrate | Acidic Pickling Component | Fisher Scientific |
| Sodium Hydroxide Beads | Alkaline Etch Component | Fisher Scientific |
| Triethylamine | Alkaline Etch Component | Evonik |
| Bostex 378 | Alkaline Etch Component | Akron Dispersions |

**TABLE 2: Electrocoat Primer and Topcoat Coating Examples**

| Material | Comp. Ex 1 | Comp. Ex 2 | Ex 3 |
|---|---|---|---|
| FIRST COATING - Electrodeposited coating layer | | | |
| Charge 1 | g | g | g |
| ACRS2200 | 1055.69 | 1055.69 | 1055.69 |
| | | | |
| Charge 2 | | | |
| ACPP1120 | 151.18 | 151.18 | 151.18 |
| ACCP2240 | 171.33 | 171.33 | 171.33 |
| | | | |

| Charge 3 | | | |
|---|---|---|---|
| DI Water | 1421.79 | 1421.79 | 1421.79 |
| | | | |
| Total Blended Weight | 2800.0 | 2800.0 | 2800.0 |
| | | | |

| SECOND COATING - Non-electrodeposited coating layer | | Comp Ex 2 | Ex 3 |
|---|---|---|---|
| Component A | g | g | g |
| Desmophen 651 MPAX | - | 45.81 | 45.81 |
| Incozol LV | - | 16.15 | 16.15 |
| Methy n amyl ketone | - | 13.52 | 11.76 |
| Disperbyk 110 | - | 0.2 | 0.2 |
| Butyl Acetate | - | 4.51 | 23.92 |
| 100% ½ second CAB in Toluene | - | 2.0 | 2.0 |
| 100% Desmorapid PP in Toluene | - | 2.49 | 2.49 |
| Ektasolve EEP | - | 24.79 | 21.57 |
| Methyl Isobutyl Ketone | - | 33.81 | 29.41 |
| Special Black 5 | - | 0.06 | 0.05 |
| Bayferrox 3920 | - | 0.3 | 0.26 |
| Portaryte B4 | - | 28.43 | 24.79 |
| Bentone 27 | - | 0.9 | 0.78 |
| Minex 7 | - | 79.80 | 69.59 |
| Lancomatt 1100 | - | 10.97 | 10.97 |
| R706 TiO2 | - | 48.78 | 42.54 |
| Inhibicor 1000 | - | - | 20 |
| | | | |

| Component B | | | |
|---|---|---|---|
| Desmodur N75 | - | 70.88 | 70.88 |
| Xylene | - | 2.33 | 2.33 |
| | | | |
| | | | |
| Total | | 385.73 | 395.50 |

Electrodepositable Coating Composition and Electrodeposited Primer Coating Layer: The same electrodepositable coating composition was used for each of Comparative Example 1, Comparative Example 2, and Experimental Example 3, and was prepared by the following procedure: Charge 1 was added to a 1 gallon plastic bucket and agitation was started. Charge 2 was added slowly over 5 minutes. Finally, Charge 3 was added over 5 minutes. The resulting mixture was stirred for an additional 15 minutes. The paint was then ultrafiltered to remove 50% of the original mass of the bath which was replaced with additional deionized water equal to the mass removed to return it to the original starting weight.

Prior to electrodeposition of the coating, 2024 T3 bare aluminum alloy 3 x 4" substrate panels were prepared as follows: Aluminum alloy panels were cleaned using a methyl ethyl ketone wipe then processed as outlined in steps 1 through 13 of the TABLE 3 below.

**TABLE 3**

| Alkaline Etch and Nitric Sulfuric Pickle Process | | | | |
|---|---|---|---|---|
| Step | Process Description | Composition | Time | Temp |
| 1 | Alkaline Clean | Turco Cleaning Solution | 5 minutes | 60-70°C |
| 2 | Rinse | DI Water | 1 minute | RT |
| 3 | Air Dry | N/A | 0 to 12 hrs | |
| 4 | Alkaline Etch | Alkaline Etch Solution | 3 minutes | RT |
| 5 | Rinse | DI Water | 1 minute | RT |
| 6 | DI Squirt Bottle Rinse | DI Water | N/A | RT |
| 7 | De-smut | 30% Nitric Acid in DI Water | 0.25 to 1 minute | RT |
| 8 | Rinse | DI Water | 1 | RT |
| 9 | Acid Pickle | Nitric Sulfuric Pickle Solution | 8 | 50-60°C |
| 10 | Rinse | DI Water | 1 | RT |
| 11 | Rinse | DI Water | 1 | RT |
| 12 | DI Squirt Bottle Rinse | DI Water | N/A | RT |
| 13 | Air Dry | N/A | 1 to 3 hours | RT |

The Turco Cleaning Solution, Alkaline Etch Solution, and Nitric Sulfuric Pickel Solution compositions are listed in TABLES 4, 5 and 6 below, and preparation instructions are provided for each composition below.

**TABLE 4**

| Turco Cleaning Solution | | |
|---|---|---|
| Charge | Material | Amount |
| 1 | Turco 4215 NC LT | 48 g |
| 2 | DI Water | Balance to total of 1000 ml |

The Turco Cleaning Solution was prepared by weighing the indicated amount of Turco 4215 NC-LT in a 1000 mL beaker followed by addition of DI Water with thorough stirring to dissolve the Turco 4215 NC-LT to produce 1000 mL of solution.

**TABLE 5**

| Alkaline Etch Solution | | |
|---|---|---|
| Charge | Material | Amount |
| 1 | NaOH beads | 612 g |
| 2 | DI Water | 612 g |
| 3 | Bostex 378 | 60 ml |
| 4 | Triethylamine | 40 ml |
| 5 | DI Water | 3100 ml |

The Alkaline Etch Solution was prepared by weighing charge #2 in a glass vessel which can accommodate 4000 mL; weighing up charge #1 in separate container; slowly adding charge #1 to charge #2 with agitation resulting in an exothermic reaction that heats the solution. The solution was allowed to cool for 15 minutes followed by addition of the remaining charges 3, 4, and 5 in order with thorough mixing between additions.

**TABLE 6**

| Nitric Sulfuric Pickle Solution | | |
|---|---|---|
| Charge | Material | Amount |
| 1 | DI Water | 500 ml |
| 2 | Sulfuric Acid (93-98%) | 290 g |
| 3 | Nitric Acid (68-70%) | 150 g |
| 4 | Iron (III) Sulphate*5H₂O | 76.75 g |
| 5 | DI Water | balance to total 1000ml |

The Nitric Sulfuric Pickle Solution was prepared by placing charge #1 in a 1000 mL beaker; weighing charge #2 and charge #3 in two separate containers; slowly adding charge #2, followed by charge #3 to the 1000 mL beaker with agitation. The addition results in an exothermic reaction that heated the solution. Charge #4 was weighed in separate container and was then slowly added to the 1000 mL beaker with agitation. Once charge #4 was dissolved, the DI water was added to produce 1000 mL of solution.

After the test panel was treated, the electrodepositable coating composition was electrodeposited (140V/90 seconds/75°F) onto the treated 2024 T3 bare test panels with the aluminum panel serving as the electrode. The electrodepositable coating composition was at a temperature of 75°F, and a 140V current was applied for 90 seconds in order to electrodeposit the coating. The electrocoated panels were then baked at 250°F for 60 minutes. The resultant electrodeposited coating had a dry film thickness of from 0.6 to 0.9 mils.

SECOND COATING LAYER: For the Component A of the coating compositions of Comparative Example 2 and Experimental Example 3 indicated in Table 2, all materials were weighed and placed into glass jars and dispersing media was then added to each jar at a level equal to approximately one-half the total weight of the component materials. The jars were sealed with lids and then placed on a Lau Dispersing Unit with a dispersion time of 3 hours.

For the Component B of the coating compositions of Comparative Example 2 and Experimental Example 3 indicated in Table 2, the two materials were placed in a jar and mixed thoroughly.

Components A and B of the non-electrodepositable coating compositions (i.e., second coating layer) of Comparative Example 2 and Experimental Example 3 were blended together just prior to spray application over the baked electrodeposited coating layer. The second coatings were applied to a dry film thickness of the second coating between 1.4 to 1.7 mils using an air atomized spray gun.

The multi-layered coated test panels were allowed to age under ambient conditions for a minimum of 7 days, after which the panels were inscribed with a 10 cm by 10 cm "X" that was scribed into the panel surface to a sufficient depth to penetrate any surface coating and to expose the underlying metal. The single layered test panel of Comparative Example 1 was also scribed in the same way. The scribed coated test panels were then placed into a 5% sodium chloride neutral salt spray cabinet operated according to ASTM B117 (exception: pH & salt concentration checked weekly as opposed to daily) for a period of 1440 hours of exposure.

Following the exposure, the panels were removed, dried and analyzed for corrosion resistance. The rating scale is shown in TABLE 7 below, and the corrosion data is shown in TABLE 8.

**TABLE 7**

| Corrosion Rating Scale | |
|---|---|
| Scribe Corrosion: Lower rating number is better | Rating is 0 to 100 and number represents percent of scribe area showing visible corrosion |
| % Dark/Nature of Scribe: Lower rating number is better | Rating is 0 - 100 and number represents percent of scribe which is dark/tarnished scribe. |
| Number of Scribe Blisters: Lower rating number is better | Total number of blisters adjacent to scribe blisters are counted up to 30 |
| Max. Scribe Blister Size: Lower number rating is better. The size of the largest blister adjacent to the scribe is recorded as: | 0 - No scribe blisters are present |
| | <1,25mm - Largest scribe blister is less than 1,25mm diameter |
| | >1,25mm - Largest scribe blister is larger than 1.25 mm |

**TABLE 8**

| | First Coating | Second Coating | % Scribe Corrosion | % Dark/Nature of Scribe | # of Scribe Blisters | Scribe Blister Size (mm) |
|---|---|---|---|---|---|---|
| Comp Ex. 1 | Electrocoat Primer | None | 45 | 95 | 0 | 0 |
| Comp Ex 2 | | Topcoat No Azole Corrosion Inhibitor | 45 | 90 | 17 | >1.25 |
| Example 3 | | Topcoat w/ Azole Corrosion Inhibitor | 5 | 45 | 0 | 0 |

For Comparative Example 1 vs. Experimental Example 3, the results in the table above, clearly shows that applying a topcoat with inhibitor over the electrocoat primer provides a decrease in % scribe corrosion and a decrease in % dark scribe. For Comparative Example 2 vs. Experimental Example 3, the results in the table show that an electrocoat primer with a topcoat with inhibitor has improved scribe corrosion and nature of scribe, along with the elimination of scribe blisters.

**TABLE 9 - 5976 hours**

| | First Coating | Second Coating | Alloy | % Scribe Corrosion | % Dark/Nature of Scribe | # of Scribe Blisters | Blister size |
|---|---|---|---|---|---|---|---|
| Comp Ex. 1 | Electrocoat Primer | None | bare | 55 | 95 | 4 | 0 |
| | | | clad | 53 | 95 | >31 | >1.25 |
| Comp Ex 2 | | Topcoat, No Inhibitor | bare | 65 | 95 | 6 | 0 |
| | | | clad | 67 | 95 | 31 | >1.25 |
| Ex 3 | | Topcoat w/ Inhibitor | bare | 7.5 | 52 | 0 | 0 |
| | | | clad | 12.5 | 72 | 5 | >1.25 |

For Comparative Example 1 vs. Example 3, the results in the table above clearly shows that applying a topcoat with inhibitor over the electrocoat primer provides a decrease in % scribe corrosion and a decrease in % dark scribe. For Comparative Example 2 vs. Example 3, the results in the table show that an electrocoat primer with a topcoat with inhibitor has improved scribe corrosion and nature of scribe, along with the elimination of scribe blisters over bare alloy and a significant reduction in scribe blisters over the clad alloy.

## Claims

1. A system for coating a metal substrate comprising:
an anionic electrodepositable coating composition comprising a film-forming binder comprising an anionic salt group-containing film-forming polymer and a curing agent, wherein the anionic salt group-containing film-forming polymer does not include carbamate functional groups if the anionic salt group-containing film-forming polymer is a phosphatized epoxy resin; and
a non-electrodepositable coating composition comprising a curable, organic film-forming binder and a corrosion inhibitor comprising an azole.

2. The system for coating a metal substrate of Claim 1, wherein the anionic salt group containing film-forming polymer comprises a hydroxyl functional group, a primary or secondary amino functional group, a thiol functional group, a carboxylic acid functional group, or any combination thereof; and/or wherein the anionic salt group containing film-forming polymer comprises a phosphatized polyepoxide, a phosphatized addition polymer, or any combination thereof; and/or wherein the curing agent of the electrodepositable coating composition comprises an at least partially blocked polyisocyanate, an aminoplast resin, a phenoplast resin, or any combination thereof; and/or wherein the curing agent preferably comprises high molecular weight volatile groups, wherein the high molecular weight volatile groups preferably comprise 5% to 50% by weight of the film-forming binder.

3. The system for coating a metal substrate of any of the preceding Claims, wherein the anionic electrodepositable coating composition further comprises a corrosion inhibitor, wherein the corrosion inhibitor preferably comprises an azole, a calcium ion-exchanged silica, or any combination thereof; or wherein the anionic electrodepositable coating composition is substantially free, essentially free, or completely free of corrosion inhibitor.

4. The system for coating a metal substrate of any of the preceding Claims, wherein the non-electrodepositable coating composition comprises a waterborne or solventborne coating composition.

5. The system for coating a metal substrate of any of the preceding Claims, wherein non-electrodepositable coating composition comprises a film-forming binder comprising an organic resin component; and a curing agent component.

6. The system for coating a metal substrate of Claim 5, wherein the film-forming binder comprises functional groups comprising at least one of carboxylic acid groups, amino groups, epoxide groups, hydroxyl groups, thiol groups, carbamate groups, amide groups, urea groups, (meth)acrylate groups, styrenic groups, vinyl groups, allyl groups, aldehyde groups, acetoacetate groups, hydrazide groups, cyclic carbonate, ketone groups, carbodiimide groups, oxazoline groups, alkoxy-silane functional groups, isocyanato functional groups, maleic acid or anhydride groups, or any combination thereof; and/or wherein the organic resin component comprises one or more of acrylic polymers, polyesters, polyurethanes, polyamides, polyethers, polythioethers, polythioesters, polythiols, polyenes, polyols, polysilanes, polysiloxanes, fluoropolymers, polycarbonates, and epoxy resins; and/or wherein the curing agent component comprises an aminoplast, a polyisocyanates, a polyepoxide, a beta-hydroxyalkylamide, a polyacid, an organometallic acid-functional material, a polyamine, a polyamide, a polysulfide, a polythiol, a polyene, a polyol, a polysilane, or any combination thereof; and/or wherein the organic resin component comprises a polymer having epoxide functional groups, and the curing agent component comprises a crosslinker comprising amino functional groups or wherein the organic resin component comprises a polymer having hydroxyl functional groups, and the curing agent component comprises a crosslinker comprising isocyanato functional groups.

7. The system for coating a metal substrate of any of the preceding Claims, wherein the azole of the non-electrodepositable coating composition comprises a triazole, a benzotriazole, a benzothiazole, a thiadiazole, an imidazole, an oxazoles, or any combination thereof; and/or wherein the azole of the non-electrodepositable coating composition comprises 5-methyl benzotriazole, tolyltriazole, 2,5-dimercapto-1,3,4-thiadiazole, 2-mercaptobenzothiazole, 2-mercaptobenzimidazole, 1-phenyl-5-mercaptotetrazole, 2-amino-5-mercapto-1,3,4-thiadiazole, 2-mercapto-1-methylimidazole, 2-amino-5-ethyl-1,3,4-thiadiazole, 2-amino-5-ethylthio-1,3,4-thiadiazole, 5-phenyltetrazole, 7h-imidazo(4,5-d)pyrimidine, 2-amino thiazole, 2-hydroxybenzothiazole, benzothiazole, 1-phenyl-4-methylimidazole, and 1-(p-tolyl)-4-methlyimidazole, salts thereof, or any combination thereof; and/or wherein the azole of the non-electrodepositable coating composition comprises a zinc salt of 2,5-dimercapto-1,3,4-thiadiazole and/or a zinc salt of 2-mercaptobenzothiazole.

8. A method of coating a metal substrate, the method comprising:
electrodepositing the electrodepositable coating composition of any Claims 1-7 to at least a portion of the substrate to form an electrodeposited coating layer; and
applying the non-electrodepositable coating composition of any of Claims 1-7 to at least a portion of the electrodeposited coating layer to form a second coating layer.

9. The method of Claim 8, wherein the applying of the non-electrodepositable coating composition comprises dipping, immersion, spraying, intermittent spraying, dipping followed by spraying, spraying followed by dipping, brushing, roll-coating, or any combination thereof.

10. A multilayer coated metal substrate comprising (a) a metal substrate; (b) an electrodeposited coating layer present on at least a portion of the metal substrate, wherein the electrodeposited coating layer comprises an anionic salt group-containing film-forming polymer and a curing agent, and the anionic salt group-containing film-forming polymer does not include carbamate functional groups if the anionic salt group-containing film-forming polymer is a phosphatized epoxy resin; and (c) a second coating layer present on at least a portion of the electrodeposited coating layer, wherein the second coating layer comprises a corrosion inhibitor comprising an azole, wherein the electrodeposited coating layer is electrodeposited from the electrodepositable coating composition of any of Claims 1-7, and the second coating layer is applied from the non-electrodepositable coating composition of any of Claims 1-7.

11. The multilayer coated metal substrate of Claim 10, wherein the electrodepositable coating composition comprises a corrosion inhibitor comprising, consisting essentially of, or consisting of an azole, a calcium ion-exchanged silica, or any combination thereof, or wherein the electrodepositable coating composition is substantially free, essentially free, or completely free of corrosion inhibitor; or wherein the second coating layer comprises a corrosion inhibitor comprising, consisting essentially of, or consisting of an azole, wherein the azole comprises, consists essentially of, or consists of 5-methyl benzotriazole, tolyltriazole, 2,5-dimercapto-1,3,4-thiadiazole, 2-mercaptobenzothiazole, 2-mercaptobenzimidazole, 1-phenyl-5-mercaptotetrazole, 2-amino-5-mercapto-1,3,4-thiadiazole, 2-mercapto-1-methylimidazole, 2-amino-5-ethyl-1,3,4-thiadiazole, 2-amino-5-ethylthio-1,3,4-thiadiazole, 5-phenyltetrazole, 7h-imidazo(4,5-d)pyrimidine, 2-amino thiazole, 2-hydroxybenzothiazole, benzothiazole, 1-phenyl-4-methylimidazole, and 1-(p-tolyl)-4-methlyimidazole, salts thereof, or any combination thereof; or wherein the second coating layer comprises a corrosion inhibitor comprising, consisting essentially of, or consisting of a zinc salt of 2,5-dimercapto-1,3,4-thiadiazole or a zinc salt of 2-mercaptobenzothiazole.

12. The multilayer coated metal substrate of any of Claims 10-11, wherein the metal substrate comprises aluminum or an aluminum alloy, wherein the metal substrate preferably comprises an aluminum alloy, and the aluminum alloy comprises a 2000, 3000, 4000, 5000, 6000, or 7000, series aluminum alloy; or a 2024 aluminum alloy, a 7075 aluminum alloy, or a 6061 aluminum alloy.

13. The multilayer coated metal substrate of any of Claims 10-12, wherein the metal substrate is clad or not clad, and if clad, the clad layer may comprise the same or a different material as the metal substrate; and/or wherein the metal substrate is a clad aluminum alloy and wherein the clad layer is aluminum; and or wherein the metal substrate is an aircraft part.

14. The multilayer coated metal substrate of any of Claims 10-13, wherein the film-forming binder of the second coating layer comprises a fluoropolymer and/or a polyurethane.

15. The multilayer coated metal substrate of any of Claims 10-14, wherein the second coating layer is a topcoat or a clearcoat.

## Patentansprüche

1. Ein System zum Beschichten eines Metallsubstrats umfassend:
eine anionische galvanisch abscheidbare Beschichtungszusammensetzung umfassend ein filmformendes Bindemittel umfassend ein filmbildendes Polymer, welches eine anionische Salzgruppe enthält, und ein Härtungsmittel, wobei das filmbildende Polymer, welches eine anionische Salzgruppe enthält, keine carbamatfunktionellen Gruppen beinhaltet, wenn das filmbildende Polymer, welches eine anionische Salzgruppe enthält, ein phosphatiertes Epoxyharz ist; und
eine nicht galvanisch abscheidbare Beschichtungszusammensetzung umfassend ein härtbares organisches filmbildendes Bindemittel und einen Korrosionsinhibitor umfassend ein Azol.

2. Das System zum Beschichten eines Metallsubstrats gemäß Anspruch 1, wobei das filmbildende Polymer, welches eine anionische Salzgruppe enthält, eine hydroxylfunktionelle Gruppe, eine primäre oder sekundäre aminofunktionelle Gruppe, eine thiolfunktionelle Gruppe, eine carbonsäurefunktionelle Gruppe oder irgendeine Kombination derselben umfasst; und/oder wobei das filmbildende Polymer, welches eine anionische Salzgruppe enthält, ein phosphatiertes Polyepoxid, ein phosphatiertes Additionspolymer oder irgendeine Kombination derselben enthält; und/oder wobei das Härtungsmittel der galvanisch abscheidbaren Beschichtungszusammensetzung ein mindestens teilweise geblocktes Polyisocyanat, ein Aminoplastharz, ein Phenoplastharz oder irgendeine Kombination derselben umfasst; und/oder wobei das Härtungsmittel vorzugsweise flüchtige Gruppen von hohem Molekulargewicht umfasst, wobei die flüchtigen Gruppen von hohem Molekulargewicht vorzugsweise 5 bis 50 Gew.-% des filmbildenden Bindemittels umfassen.

3. Das System zum Beschichten eines Metallsubstrats gemäß irgendeinem der vorhergehenden Ansprüche, wobei die anionische galvanisch abscheidbare Beschichtungszusammensetzung des Weiteren einen Korrosionsinhibitor umfasst, wobei der Korrosionsinhibitor vorzugsweise ein Azol, eine calciumionenausgetauschte Kieselsäure oder irgendeine Kombination derselben umfasst; oder wobei die anionische galvanisch abscheidbare Beschichtungszusammensetzung im Wesentlichen, weitgehend oder komplett frei von Korrosionsinhibitor ist.

4. Das System zum Beschichten eines Metallsubstrats gemäß irgendeinem der vorhergehenden Ansprüche, wobei die nicht galvanisch abscheidbare Beschichtungszusammensetzung eine Beschichtungszusammensetzung auf Wasserbasis oder Basis von Lösungsmittel umfasst.

5. Das System zum Beschichten eines Metallsubstrats gemäß irgendeinem der vorhergehenden Ansprüche, wobei die nicht galvanisch abscheidbare Beschichtungszusammensetzung ein filmbildendes Bindemittel umfassend eine organische Harzkomponente und eine Härtungsmittelkomponente umfasst.

6. Das System zum Beschichten eines Metallsubstrats gemäß Anspruch 5, wobei das filmbildende Bindemittel funktionelle Gruppen umfasst, welche mindestens eine von Carbonsäuregruppen, Aminogruppen, Epoxidgruppen, Hydroxylgruppen, Thiolgruppen, Carbamatgruppen, Amidgruppen, Harnstoffgruppen, (Meth)acrylatgruppen, Styrolgruppen, Vinylgruppen, Allylgruppen, Aldehydgruppen, Acetoacetatgruppen, Hydrazidgruppen, cyclischem Carbonat, Ketogruppen, Carbodiimidgruppen, Oxazolingruppen, alkoxysilanfunktionellen Gruppen, isocyanatfunktionellen Gruppen, Maleinsäure- oder Anhydridgruppen oder irgendeine Kombination davon umfasst; und/oder wobei die organische Harzkomponente eines oder mehrere von Acrylpolymeren, Polyestern, Polyurethanen, Polyamiden, Polyethern, Polythioethern, Polythioestern, Polythiolen, Polyenen, Polyolen, Polysilanen, Polysiloxanen, Fluorpolymeren, Polycarbonaten und Epoxyharzen umfasst; und/oder wobei die Härtungsmittelkomponente ein Aminoplast, ein Polyisocyanat, ein Polyepoxid, ein β-Hydroxyalkylamid, eine mehrwertige Säure, ein Organometallsäure-funktionelles Material, ein Polyamin, ein Polyamid, ein Polysulfid, ein Polythiol, ein Polyen, ein Polyol, ein Polysilan oder irgendeine Kombination derselben umfasst; und/oder wobei die organische Harzkomponente ein Polymer mit epoxidfunktionellen Gruppen umfasst und die Härtungsmittelkomponente einen Quervernetzer umfassend aminofunktionelle Gruppen umfasst oder wobei die organische Harzkomponente ein Polymer mit hydroxylfunktionellen Gruppen umfasst und die Härtungsmittelkomponente einen Quervernetzer umfassend isocyanatfunktionelle Gruppen umfasst.

7. Das System zum Beschichten eines Metallsubstrats gemäß irgendeinem der vorhergehenden Ansprüche, wobei das Azol der nicht galvanisch abscheidbaren Beschichtungszusammensetzung ein Triazol, ein Benzotriazol, ein Benzothiazol, ein Thiadiazol, ein Imidazol, ein Oxazol oder irgendeine Kombination derselben umfasst; und/oder wobei das Azol der nicht galvanisch abscheidbaren Beschichtungszusammensetzung 5-Methylbenzotriazol, Tolyltriazol, 2,5-Dimercapto-1,3,4-thiadiazol, 2-Mercaptobenzothiazol, 2-Mercaptobenzimidazol, 1-Phenyl-5-mercapto-tetrazol, 2-Amino-5-mercapto-1,3,4-thiadiazol, 2-Mercapto-1-methylimidazol, 2-Amino-5-ethyl-1,3,4-thiadiazol, 2-Amino-5-ethylthio-1,3,4-thiadiazol, 5-Phenyltetrazol, 7H-Imidazo(4,5-d)pyrimidin, 2-Aminothiazol, 2-Hydroxybenzothiazol, Benzothiazol, 1-Phenyl-4-methylimidazol und 1-(p-Tolyl)-4-methylimidazol, Salze derselben oder irgendeine Kombination derselben umfasst; und/oder wobei das Azol der nicht galvanisch abscheidbaren Beschichtungszusammensetzung ein Zinksalz von 2,5-Dimercapto-1,3,4-thiadiazol und/oder ein Zinksalz von 2-Mercaptobenzothiazol umfasst.

8. Ein Verfahren zum Beschichten eines Metallsubstrats, das Verfahren umfassend:
galvanisches Abscheiden der galvanisch abscheidbaren Beschichtungszusammensetzung gemäß irgendeinem der Ansprüche 1 bis 7 auf mindestens einem Teil des Substrats, um eine galvanisch abgeschiedene Beschichtung zu bilden; und
Aufbringen der nicht galvanisch abscheidbaren Beschichtungszusammensetzung gemäß irgendeinem der Ansprüche 1 bis 7 auf mindestens einen Teil der galvanisch abgeschiedenen Beschichtung, um eine zweite Beschichtung zu bilden.

9. Das Verfahren gemäß Anspruch 8, wobei das Aufbringen der nicht galvanisch abscheidbaren Beschichtungszusammensetzung Tauchen, Eintauchen, Sprühen, intermittierendes Sprühen, Tauchen gefolgt von Sprühen, Sprühen gefolgt von Tauchen, Streichen, Walzenbeschichtung oder irgendeine Kombination derselben umfasst.

10. Ein mehrlagig beschichtetes Metallsubstrat umfassend (a) ein Metallsubstrat, (b) eine galvanisch abgeschiedene Beschichtungslage, die sich auf mindestens einem Teil des Metallsubstrats befindet, wobei die galvanisch abgeschiedene Beschichtungslage ein filmbildendes Polymer, welches eine anionische Salzgruppe enthält, und ein Härtungsmittel umfasst, und das filmbildende Polymer, welches eine anionische Salzgruppe enthält, keine carbamatfunktionellen Gruppen enthält, wenn das filmbildende Polymer, welches eine anionische Salzgruppe enthält, ein phosphatiertes Epoxyharz ist; und (c) eine zweite Beschichtungslage, welche auf mindestens einem Teil der galvanisch abgeschiedenen Beschichtungslage vorhanden ist, wobei die zweite Beschichtungslage einen Korrosionsinhibitor umfasst, welcher ein Azol umfasst, wobei die galvanisch abgeschiedene Beschichtungslage aus der galvanisch abscheidbaren Beschichtungszusammensetzung gemäß irgendeinem der Ansprüche 1 bis 7 galvanisch abgeschieden ist, und die zweite Beschichtungslage aus der nicht galvanisch abscheidbaren Beschichtungszusammensetzung gemäß irgendeinem der Ansprüche 1 bis 7 aufgebracht ist.

11. Das mehrlagig beschichtete Metallsubstrat gemäß Anspruch 10, wobei die galvanisch abscheidbare Beschichtungszusammensetzung einen Korrosionsinhibitor umfasst, welcher ein Azol, eine calciumionenausgetauschte Kieselsäure oder irgendeine Kombination davon umfasst, im Wesentlichen daraus besteht oder daraus besteht; oder wobei die anionische galvanisch abscheidbare Beschichtungszusammensetzung im Wesentlichen, weitgehend oder komplett frei von Korrosionsinhibitor ist; oder wobei die zweite Beschichtungslage einen Korrosionsinhibitor umfasst, welcher ein Azol umfasst, im Wesentlichen daraus besteht oder daraus besteht, wobei das Azol 5-Methylbenzotriazol, Tolyltriazol, 2,5-Dimercapto-1,3,4-thiadiazol, 2-Mercaptobenzothiazol, 2-Mercaptobenzimidazol, 1-Phenyl-5-mercapto-tetrazol, 2-Amino-5-mercapto-1,3,4-thiadiazol, 2-Mercapto-1-methylimidazol, 2-Amino-5-ethyl-1,3,4-thiadiazol, 2-Amino-5-ethylthio-1,3,4-thiadiazol, 5-Phenyltetrazol, 7H-Imidazo(4,5-d)pyrimidin, 2-Aminothiazol, 2-Hydroxybenzothiazol, Benzothiazol, 1-Phenyl-4-methylimidazol und 1-(p-Tolyl)-4-methylimidazol, Salze derselben, oder irgendeine Kombination derselben umfasst, im Wesentlichen daraus besteht oder daraus besteht; oder wobei die zweite Beschichtungslage einen Korrosionsinhibitor umfasst, der ein Zinksalz von 2,5-Dimercapto-1,3,4-thiadiazol oder ein Zinksalz von 2-Mercaptobenzothiazol umfasst, im Wesentlichen daraus besteht oder daraus besteht.

12. Das mehrlagig beschichtete Metallsubstrat gemäß irgendeinem der Ansprüche 10 bis 11, wobei das Metallsubstrat Aluminium oder eine Aluminiumlegierung umfasst, wobei das Metallsubstrat vorzugsweise eine Aluminiumlegierung umfasst, und die Aluminiumlegierung eine Aluminiumlegierung der 2000, 3000, 4000, 5000, 6000 oder 7000 Serie oder eine 2024 Aluminiumlegierung, eine 7075 Aluminiumlegierung oder eine 6061 Aluminiumlegierung umfasst.

13. Das mehrlagig beschichtete Metallsubstrat gemäß irgendeinem der Ansprüche 10 bis 12, wobei das Metallsubstrat plattiert oder unplattiert ist und falls plattiert, die Plattierungsschicht das Gleiche oder ein anderes Material als das Metallsubstrat umfassen kann; und/oder wobei das Metallsubstrat eine plattierte Aluminiumlegierung ist und wobei die Plattierungsschicht Aluminium ist; und/oder wobei das Metallsubstrat ein Flugzeugteil ist.

14. Das mehrlagig beschichtete Metallsubstrat gemäß irgendeinem der Ansprüche 10 bis 13, wobei das filmbildende Bindemittel der zweiten Beschichtungsschicht ein Fluorpolymer und/oder ein Polyurethan umfasst.

15. Das mehrlagig beschichtete Metallsubstrat gemäß irgendeinem der Ansprüche 10 bis 14, wobei die zweite Beschichtungslage eine Deckschicht oder eine Klarlackschicht ist.

## Revendications

1. Système de revêtement d'un substrat métallique comprenant :
une composition de revêtement électrodéposable anionique comprenant un liant filmogène comprenant un polymère filmogène contenant un groupe sel anionique et un agent de durcissement, dans lequel le polymère filmogène contenant un groupe sel anionique ne comporte pas de groupes fonctionnels carbamate si le polymère filmogène contenant un groupe sel anionique est une résine époxy phosphatée ; et
une composition de revêtement non électrodéposable comprenant un liant filmogène organique durcissable et un inhibiteur de corrosion comprenant un azole.

2. Système de revêtement d'un substrat métallique selon la revendication 1, dans lequel le polymère filmogène contenant un groupe sel anionique comprend un groupe fonctionnel hydroxyle, un groupe fonctionnel amino primaire ou secondaire, un groupe fonctionnel thiol, un groupe fonctionnel acide carboxylique ou toute combinaison de ceux-ci ; et/ou dans lequel le polymère filmogène contenant un groupe sel anionique comprend un polyépoxyde phosphaté, un polymère d'addition phosphaté ou toute combinaison de ceux-ci ; et/ou dans lequel l'agent de durcissement de la composition de revêtement électrodéposable comprend un polyisocyanate au moins partiellement bloqué, une résine aminoplaste, une résine phénoplaste ou toute combinaison de ceux-ci ; et/ou dans lequel l'agent de durcissement comprend de préférence des groupes volatils de poids moléculaire élevé, dans lequel les groupes volatils de poids moléculaire élevé comprennent de préférence 5 % à 50 % en poids du liant filmogène.

3. Système de revêtement d'un substrat métallique selon l'une quelconque des revendications précédentes, dans lequel la composition de revêtement électrodéposable anionique comprend en outre un inhibiteur de corrosion, dans lequel l'inhibiteur de corrosion comprend de préférence un azole, une silice échangeuse d'ions calcium ou toute combinaison de ceux-ci ; ou dans lequel la composition de revêtement électrodéposable anionique est sensiblement exempte, essentiellement exempte ou complètement exempte d'inhibiteur de corrosion.

4. Système de revêtement d'un substrat métallique selon l'une quelconque des revendications précédentes, dans lequel la composition de revêtement non électrodéposable comprend une composition de revêtement à base aqueuse ou à base de solvant.

5. Système de revêtement d'un substrat métallique selon l'une quelconque des revendications précédentes, dans lequel la composition de revêtement non électrodéposable comprend un liant filmogène comprenant un composant résine organique ; et un composant agent de durcissement.

6. Système de revêtement d'un substrat métallique selon la revendication 5, dans lequel le liant filmogène comprend des groupes fonctionnels comprenant au moins un élément parmi des groupes acide carboxylique, des groupes amino, des groupes époxyde, des groupes hydroxyle, des groupes thiol, des groupes carbamate, des groupes amide, des groupes urée, des groupes (méth)acrylate, des groupes styrène, des groupes vinyle, des groupes allyle, des groupes aldéhyde, des groupes acétoacétate, des groupes hydrazide, un carbonate cyclique, des groupes cétone, des groupes carbodiimide, des groupes oxazoline, des groupes fonctionnels alcoxy-silane, des groupes fonctionnels isocyanate, des groupes acide maléique ou anhydride ou toute combinaison de ceux-ci ; et/ou dans lequel le composant résine organique comprend un ou plusieurs éléments parmi des polymères acryliques, des polyesters, des polyuréthanes, des polyamides, des polyéthers, des polythioéthers, des polythioesters, des polythiols, des polyènes, des polyols, des polysilanes, des polysiloxanes, des fluoropolymères, des polycarbonates et des résines époxy ; et/ou dans lequel le composant agent de durcissement comprend un aminoplaste, un polyisocyanate, un polyépoxyde, un bêta-hydroxyalkylamide, un polyacide, un matériau organométallique à fonction acide, une polyamine, un polyamide, un polysulfure, un polythiol, un polyène, un polyol, un polysilane ou toute combinaison de ceux-ci ; et/ou dans lequel le composant résine organique comprend un polymère ayant des groupes fonctionnels époxyde, et le composant agent de durcissement comprend un agent de réticulation comprenant des groupes fonctionnels amino ou dans lequel le composant de résine organique comprend un polymère ayant des groupes fonctionnels hydroxyle, et le composant d'agent de durcissement comprend un agent de réticulation comprenant des groupes fonctionnels isocyanate.

7. Système de revêtement d'un substrat métallique selon l'une quelconque des revendications précédentes, dans lequel l'azole de la composition de revêtement non électrodéposable comprend un triazole, un benzotriazole, un benzothiazole, un thiadiazole, un imidazole, un oxazole ou toute combinaison de ceux-ci ; et/ou dans lequel l'azole de la composition de revêtement non électrodéposable comprend du 5-méthylbenzotriazole, du tolyltriazole, du 2,5-dimercapto-1,3,4-thiadiazole, du 2-mercaptobenzothiazole, du 2-mercaptobenzimidazole, du 1-phényl-5-mercaptotétrazole, du 2-amino-5-mercapto-1,3,4-thiadiazole, du 2-mercapto-1-méthylimidazole, du 2-amino-5-éthyl-1,3,4-thiadiazole, du 2-amino-5-éthylthio-1,3,4-thiadiazole, du 5-phényltétrazole, du 7h-imidazo(4,5-d)pyrimidine, du 2-aminothiazole, du 2-hydroxybenzothiazole, du benzothiazole, du 1-phényl-4-méthylimidazole et du 1-(p-tolyl)-4-méthlyimidazole, des sels de ceux-ci ou toute combinaison de ceux-ci ; et/ou dans lequel l'azole de la composition de revêtement non électrodéposable comprend un sel de zinc de 2,5-dimercapto-1,3,4-thiadiazole et/ou un sel de zinc de 2-mercaptobenzothiazole.

8. Procédé de revêtement d'un substrat métallique, le procédé comprenant :
le dépôt électrolytique de la composition de revêtement électrodéposable selon l'une quelconque des revendications 1 à 7 sur au moins une partie du substrat pour former une couche de revêtement électrodéposable ; et
l'application de la composition de revêtement non électrodéposable selon l'une quelconque des revendications 1 à 7 sur au moins une partie de la couche de revêtement électrodéposée pour former une deuxième couche de revêtement.

9. Procédé selon la revendication 8, dans lequel l'application de la composition de revêtement non électrodéposable comprend un trempage, une immersion, une pulvérisation, une pulvérisation intermittente, un trempage suivi d'une pulvérisation, une pulvérisation suivie d'un trempage, un brossage, un laminage ou toute combinaison de ceux-ci.

10. Substrat métallique revêtu multicouche comprenant (a) un substrat métallique ; (b) une couche de revêtement électrodéposée présente sur au moins une partie du substrat métallique, dans lequel la couche de revêtement électrodéposée comprend un polymère filmogène contenant un groupe sel anionique et un agent de durcissement, et le polymère filmogène contenant un groupe sel anionique ne comporte pas de groupes fonctionnels carbamate si le polymère filmogène contenant un groupe sel anionique est une résine époxy phosphatée ; et (c) une deuxième couche de revêtement présente sur au moins une partie de la couche de revêtement électrodéposée, dans lequel la deuxième couche de revêtement comprend un inhibiteur de corrosion comprenant un azole, dans lequel la couche de revêtement électrodéposée est électrodéposée à partir de la composition de revêtement électrodéposable selon l'une quelconque des revendications 1 à 7, et la deuxième couche de revêtement est appliquée à partir de la composition de revêtement non électrodéposable selon l'une quelconque des revendications 1 à 7.

11. Substrat métallique revêtu multicouche selon la revendication 10, dans lequel la composition de revêtement électrodéposable comprend un inhibiteur de corrosion comprenant, consistant essentiellement en, ou consistant en un azole, une silice échangeuse d'ions calcium ou toute combinaison de ceux-ci, ou dans lequel la composition de revêtement électrodéposable est sensiblement exempte, essentiellement exempte ou complètement exempte d'inhibiteur de corrosion ; ou dans lequel la deuxième couche de revêtement comprend un inhibiteur de corrosion comprenant, consistant essentiellement en, ou consistant en un azole, dans lequel l'azole comprend, consiste essentiellement en, ou consiste en du 5-méthylbenzotriazole, du tolyltriazole, du 2,5-dimercapto-1,3,4-thiadiazole, du 2-mercaptobenzothiazole, du 2-mercaptobenzimidazole, du 1-phényl-5-mercaptotétrazole, du 2-amino-5-mercapto-1,3,4-thiadiazole, du 2-mercapto-1-méthylimidazole, du 2-amino-5-éthyl-1,3,4-thiadiazole, du 2-amino-5-éthylthio-1,3,4-thiadiazole, du 5-phényltétrazole, du 7h-imidazo(4,5-d)pyrimidine, du 2-aminothiazole, du 2-hydroxybenzothiazole, du benzothiazole, du 1-phényl-4-méthylimidazole et du 1-(p-tolyl)-4-méthlyimidazole, des sels de ceux-ci ou toute combinaison de ceux-ci ; ou dans lequel la deuxième couche de revêtement comprend un inhibiteur de corrosion comprenant, consistant essentiellement en, ou consistant en un sel de zinc de 2,5-dimercapto-1,3,4-thiadiazole ou un sel de zinc de 2-mercaptobenzothiazole.

12. Substrat métallique revêtu multicouche selon l'une quelconque des revendications 10 à 11, dans lequel le substrat métallique comprend de l'aluminium ou un alliage d'aluminium, dans lequel le substrat métallique comprend de préférence un alliage d'aluminium, et l'alliage d'aluminium comprend un alliage d'aluminium de la série 2000, 3000, 4000, 5000, 6000 ou 7000 ; ou un alliage d'aluminium 2024, un alliage d'aluminium 7075 ou un alliage d'aluminium 6061.

13. Substrat métallique revêtu multicouche selon l'une quelconque des revendications 10 à 12, dans lequel le substrat métallique est revêtu ou non revêtu, et s'il est revêtu, la couche revêtue peut comprendre le même matériau que le substrat métallique ou un matériau différent de celui-ci ; et/ou dans lequel le substrat métallique est un alliage d'aluminium revêtu et dans lequel la couche revêtue est de l'aluminium ; et/ou dans lequel le substrat métallique est une pièce d'aéronef.

14. Substrat métallique revêtu multicouche selon l'une quelconque des revendications 10 à 13, dans lequel le liant filmogène de la deuxième couche de revêtement comprend un fluoropolymère et/ou un polyuréthane.

15. Substrat métallique revêtu multicouche selon l'une quelconque des revendications 10 à 14, dans lequel la deuxième couche de revêtement est une couche de finition ou une couche transparente.
